# EUROPEAN PATENT APPLICATION

(11) **EP 3 333 130 A1**
(43) Date of publication of application: **13.06.2018**
(21) Application number: 15900424.1
(22) Date of filing: 05.08.2015
(51) Int. Cl.: C02F 1/00

(54) **WATER TREATMENT SYSTEM, POWER GENERATION PLANT, AND METHOD FOR CONTROLLING WATER TREATMENT SYSTEM**

(71) Applicant: Mitsubishi Heavy Industries, Ltd., Tokyo 108-8215 (JP)
(72) Inventor: UKAI, Nobuyuki, Tokyo 108-8215 (JP); SAKURAI, Hideaki, Tokyo 108-8215 (JP); KATO, Katsuhiko, Tokyo 108-8215 (JP); SUZUKI, Hideo, Tokyo 108-8215 (JP); OKINO, Susumu, Tokyo 108-8215 (JP); TAKEUCHI, Kazuhisa, Tokyo 108-8215 (JP); EDA, Masayuki, Tokyo 108-8215 (JP)
(74) Representative: Henkel, Breuer & Partner
(86) International application number: PCT/JP2015/072295
(87) International publication number: WO 2017/022113

(57) **Abstract**

A water treatment system 10A for treating waste water 31 discharged from a plant facility includes: a water treatment facility 50 in which the waste water 31 is treated; a first operation data acquisition unit 41 which acquires plant operation information from the plant facility; a water quality estimation unit 42 which estimates the water quality of the waste water 31 on the basis of the plant operation information 40 that has been acquired by the first operation data acquisition unit 41; and a control unit 44 which performs feed forward control 45 over an operation condition for the water treatment facility 50 on the basis of estimated water quality 43 that has been estimated by the water quality estimation unit 42.

## Description

### Technical Field

The present invention relates to a water treatment system, a power generation plant, and a method for controlling a water treatment system.

### Background Art

For example, in a flue gas unit for treating flue gas discharged from a boiler for a thermal power generation plant or a chemical plant, as a general example of a system configuration, a denitration apparatus, an air preheater, an air heater, a dust collecting apparatus, a wet-type desulfurization apparatus, and a smokestack, for example, are arranged in order in a flue gas channel. Here, in the wet-type desulfurization apparatus, sulfur oxide (SOx) in flue gas is absorbed and removed using an absorbent, for example, absorbent slurry containing lime. In desulfurized wastewater in which gypsum generated from the absorbent slurry discharged from the desulfurization apparatus is separated, for example, the concentration of ion components such as calcium (Ca) is high. In the wastewater, scale such as the gypsum is likely to be deposited.

In regard to the design and operational conditions for a water treatment facility performing water treatment for such desulfurized wastewater, treatment conditions such as an injecting amount of a chemical agent in pretreatment are planned based on postulated conditions for supply water (for example, the water quality and the flow rate of raw water), and an operation is performed. For example, in a coal-fired thermal power generation plant, the composition of desulfurized wastewater fluctuates due to the variation in the type of thermal coal, the power generation load, and the like. Therefore, for example, in a case of a wastewater composition stricter than the planned conditions, there are cases where the water treatment facility cannot achieve predetermined performance.

In the related art, at the point of time when a water treatment facility is operated and it is measured and detected that predetermined performance is no longer able to be achieved, the cause thereof is particularized, and countermeasures are performed so as to reexamine operational conditions for the water treatment facility such that the predetermined performance is achieved. However, there is a problem in that it requires time and cost to investigate the cause, to reexamine the operational conditions, and the like when the performance has deteriorated, and it is not possible to achieve reliability of wastewater treatment.

In addition, in a case where the water treatment facility is operated and an abnormality or the like is detected by measuring the component of desulfurized wastewater, and the like, feedback control is performed, and the operational conditions and the like are changed as countermeasures so as to shift from an abnormal state to a stable state. However, in the countermeasures of performing the feedback control, since an abnormality such as scaling has already occurred, there is a problem in that it requires an extremely high cost for washing, chemical injection, and the like, in order to cause the water treatment facility to return to the stable state.

Therefore, in the related art, measuring the water quality of raw water to be supplied to a water treatment facility and performing feedforward control over an injecting amount of a chemical agent such as a flocculant based on the measurement result have been proposed (PTL 1).

### Citation List

### Patent Literature

[PTL 1] Japanese Unexamined Patent Application Publication No. 2011-005463

### Summary of Invention

### Technical Problem

However, in PTL 1 which has been proposed, there is a problem in that since the water quality of raw water is directly measured, it is difficult to perform control coping with a rapid fluctuation in water quality.

Moreover, for example, as in desulfurized wastewater from a power station, in a case where the composition of the desulfurized wastewater significantly fluctuates due to the variation in the type of thermal coal, the power generation load, and the like, resulting in water quality of wastewater stricter than the planned conditions, for example, there is a problem in that scaling or the like is caused on a membrane surface in a reverse osmosis membrane device such as a desalination apparatus so that predetermined performance as a water treatment facility cannot be achieved.

Thus, even in a case where the operational conditions for a boiler and the like significantly fluctuate, it is earnestly desired to introduce a water treatment system which can be stably operated without deteriorating the performance of the water treatment facility.

The present invention has been made in consideration of the problems, and an object thereof is to provide a water treatment system which can cope with a rapid fluctuation in water quality of raw water and which can be stably operated without deteriorating the performance of a water treatment facility even in a case where operational conditions for a boiler and the like fluctuate, a power generation plant, and a method for controlling a water treatment system.

### Solution to Problem

According to at least an embodiment of the present invention, there is provided a water treatment system for treating wastewater discharged from a plant facility. The water treatment system is configured to include a water treatment facility in which the wastewater is treated, a first operation data acquiring unit which acquires plant operation information from the plant facility, a water quality estimating unit which estimates water quality of the wastewater based on the plant operation information acquired by the first operation data acquiring unit, and a control unit which performs feedforward control over an operational condition for the water treatment facility based on the estimated water quality estimated by the water quality estimating unit.

The configuration according to some embodiments further includes a second operation data acquiring unit which acquires water treatment operation information of the water treatment facility. The water quality estimating unit is configured to estimate the water quality of the wastewater based on the plant operation information and the water treatment operation information.

The configuration according to some embodiments further includes a third operation data acquiring unit which acquires water quality information between the plant facility and the water treatment facility. The water quality estimating unit is configured to estimate the water quality of the wastewater based on the plant operation information and the water quality information acquired by the third operation data acquiring unit.

The configuration according to some embodiments further includes a regulation tank which is configured to be installed between the plant facility and the water treatment facility and to keep the wastewater for a predetermined time.

The configuration according to some embodiments further includes a regulation tank which is configured to be installed between the plant facility and the water treatment facility and to keep the wastewater for a predetermined time. The third operation data acquiring unit is configured to acquire the water quality information of the wastewater inside the regulation tank.

In the configuration according to some embodiments, the water treatment facility is provided with a desalination apparatus in which the wastewater is separated into regenerated water and concentrated water. The water quality estimating unit is configured to estimate ionic properties of Ca²⁺ and SO₄²⁻ in influent water flowing into the desalination apparatus, based on at least one of fuel data of the plant facility and operation data of the plant facility, to calculate a saturation index of gypsum in the influent water from the estimated ionic properties of Ca²⁺ and SO₄²⁻ in the influent water, and to calculate a first water recovery rate of the desalination apparatus from the saturation index of the gypsum. The control unit is configured to control at least one of supply pressure and a supply flow rate of the influent water to be supplied to the desalination apparatus such that the calculated first water recovery rate is realized.

In the configuration according to some embodiments, the water treatment facility is provided with a desalination apparatus in which the wastewater is separated into regenerated water and concentrated water. The water quality estimating unit is configured to estimate ionic concentration in influent water flowing into the desalination apparatus, based on at least one of fuel data of the plant facility and operation data of the plant facility, to calculate concentration of total dissolved solids in the influent water from the estimated ionic concentration of the influent water, and to calculate a second water recovery rate of the desalination apparatus from the concentration of the total dissolved solids. The control unit is configured to control at least one of supply pressure and a supply flow rate of the influent water to be supplied to the desalination apparatus such that the calculated second water recovery rate is realized.

In the configuration according to some embodiments, the water treatment facility is provided with a desalination apparatus in which the wastewater is separated into regenerated water and concentrated water. The water quality estimating unit is configured to estimate ionic properties of Ca²⁺ and SO₄²⁻ in influent water flowing into the desalination apparatus, based on at least one of fuel data of the plant facility and operation data of the plant facility, to calculate a saturation index of gypsum in the influent water from the estimated ionic properties of Ca²⁺ and SO₄²⁻ in the influent water, to calculate a first water recovery rate of the desalination apparatus from the saturation index of the gypsum, to estimate ionic concentration in the influent water flowing into the desalination apparatus, based on at least one of the fuel data of the plant facility and the operation data of the plant facility, to calculate concentration of total dissolved solids in the influent water from the estimated ionic concentration of the influent water, to calculate a second water recovery rate of the desalination apparatus from the concentration of the total dissolved solids, to compare a value of the calculated first water recovery rate with a value of the calculated second water recovery rate, and to select a water recovery rate having a lower value. The control unit is configured to control at least one of supply pressure and a supply flow rate of the influent water to be supplied to the desalination apparatus such that the selected water recovery rate is realized.

In the configuration according to some embodiments, the water treatment facility is provided with a desalination apparatus in which the wastewater is separated into regenerated water and concentrated water. The water quality estimating unit is configured to estimate ionic properties of Ca²⁺ and SO₄²⁻ in influent water flowing into the desalination apparatus, based on at least one of fuel data of the plant facility and operation data of the plant facility, to calculate a saturation index of gypsum in the influent water from the estimated ionic properties of Ca²⁺ and SO₄²⁻ in the influent water, and to calculate an addition amount of a scale inhibitor to be added in the influent water, from the estimated saturation index of the gypsum. The control unit is configured to control the addition amount of the scale inhibitor such that the addition amount of the scale inhibitor meets the calculated addition amount.

In the configuration according to some embodiments, the water treatment facility is provided with a silica treatment unit which removes a silica composition in the wastewater, and a desalination apparatus in which treated water having the silica composition removed is separated into regenerated water and concentrated water. The water quality estimating unit is configured to estimate concentration of the silica composition in the wastewater flowing into the silica treatment unit, based on at least one of fuel data of the plant facility and operation data of the plant facility. The control unit is configured to control an addition amount of a silica treatment chemical agent to be supplied to the silica treatment unit, in accordance with the concentration of the silica composition estimated by the water quality estimating unit.

In the configuration according to some embodiments, the water treatment facility is provided with an oxidation treatment unit which performs oxidation treatment for a metal composition in the wastewater, and a desalination apparatus in which treated water treated by the oxidation treatment unit is separated into regenerated water and concentrated water. The water quality estimating unit is configured to estimate concentration of the metal composition in the wastewater flowing into the oxidation treatment unit, based on at least one of fuel data of the plant facility and operation data of the plant facility. The control unit is configured to control a supply quantity of an oxidant to be supplied to the oxidation treatment unit, in accordance with the estimated concentration of the metal composition.

In the configuration according to some embodiments, the water treatment facility is provided with an ion exchange unit which performs treatment of adsorbing ion in the wastewater, a degassing unit which separates gas from the wastewater, and a desalination apparatus in which the wastewater is separated into regenerated water and concentrated water. The water quality estimating unit is configured to estimate ionic properties of Ca²⁺ and SO₄²⁻ in influent water flowing into the desalination apparatus, based on at least one of fuel data of the plant facility and operation data of the plant facility, to calculate a saturation index of gypsum in the influent water from the estimated ionic properties of Ca²⁺ and SO₄²⁻ in the influent water, and to calculate a first water recovery rate of the desalination apparatus from the saturation index of the gypsum. The control unit is configured to control at least one of supply pressure and a supply flow rate of the influent water to be supplied to the desalination apparatus such that the calculated first water recovery rate is realized.

In the configuration according to some embodiments, the water treatment facility is provided with an ion exchange unit which performs treatment of adsorbing ion in the wastewater, a degassing unit which separates gas from the wastewater, and a desalination apparatus in which the wastewater is separated into regenerated water and concentrated water. The water quality estimating unit is configured to estimate ionic concentration in influent water flowing into the desalination apparatus, based on at least one of fuel data of the plant facility and operation data of the plant facility, to calculate concentration of total dissolved solids in the influent water from the estimated ionic concentration of the influent water, and to calculate a second water recovery rate of the desalination apparatus from the concentration of the total dissolved solids. The control unit is configured to control at least one of supply pressure and a supply flow rate of the influent water to be supplied to the desalination apparatus such that the calculated second water recovery rate is realized.

In the configuration according to some embodiments, the water treatment facility is provided with an ion exchange unit which performs treatment of adsorbing ion in the wastewater, a degassing unit which separates gas from the wastewater, and a desalination apparatus in which the wastewater is separated into regenerated water and concentrated water. The water quality estimating unit is configured to estimate ionic properties of Ca²⁺ and SO₄²⁻ in influent water flowing into the desalination apparatus, based on at least one of fuel data of the plant facility and operation data of the plant facility, to calculate a saturation index of gypsum in the influent water from the estimated ionic properties of Ca²⁺ and SO₄²⁻ in the influent water, to calculate a first water recovery rate of the desalination apparatus from the saturation index of the gypsum, to estimate ionic concentration in the influent water flowing into the desalination apparatus, based on at least one of the fuel data of the plant facility and the operation data of the plant facility, to calculate concentration of total dissolved solids in the influent water from the estimated ionic concentration of the influent water, to calculate a second water recovery rate of the desalination apparatus from the concentration of the total dissolved solids, to compare a value of the calculated first water recovery rate with a value of the calculated second water recovery rate, and to select a water recovery rate having a lower value. The control unit is configured to control at least one of supply pressure and a supply flow rate of the influent water to be supplied to the desalination apparatus such that the selected water recovery rate is realized.

In the configuration according to some embodiments, the water treatment facility is provided with an ion exchange unit which performs treatment of adsorbing ion in the wastewater, a degassing unit which separates gas from the wastewater, and a desalination apparatus in which the wastewater is separated into regenerated water and concentrated water. The water quality estimating unit is configured to estimate ionic properties of Ca²⁺ and SO₄²⁻ in influent water flowing into the desalination apparatus, based on at least one of fuel data of the plant facility and operation data of the plant facility, to calculate a saturation index of gypsum in the influent water from the estimated ionic properties of Ca²⁺ and SO₄²⁻ in the influent water, and to calculate an addition amount of a scale inhibitor to be added in the influent water, from the saturation index of the gypsum. The control unit is configured to control the addition amount of the scale inhibitor such that the addition amount of the scale inhibitor meets the calculated addition amount.

In the configuration according to some embodiments, the water treatment facility is provided with an ion exchange unit which performs treatment of adsorbing ion in the wastewater, a degassing unit which separates gas from the wastewater, and a desalination apparatus in which the wastewater is separated into regenerated water and concentrated water. The water quality estimating unit is configured to estimate ionic properties of Ca²⁺ and HCO₃⁻, and pH in influent water flowing into the desalination apparatus, based on at least one of fuel data of the plant facility and operation data of the plant facility, and to calculate a regeneration frequency of an ion exchange resin in which the influent water circulates, from the estimated ionic properties of Ca²⁺ and HCO₃⁻, and the estimated pH in the influent water. The control unit is configured to control the regeneration frequency of the ion exchange resin such that the regeneration frequency of the ion exchange resin meets the calculated regeneration frequency.

In the configuration according to some embodiments, the water treatment facility is provided with an ion exchange unit which performs treatment of adsorbing ion in the wastewater, a degassing unit which separates gas from the wastewater, and a desalination apparatus in which the wastewater is separated into regenerated water and concentrated water. The water quality estimating unit is configured to estimate an ionic property of Mg²⁺ in influent water flowing into the desalination apparatus, based on at least one of fuel data of the plant facility and operation data of the plant facility, and to calculate a regeneration frequency of an ion exchange resin in which the influent water circulates, from the estimated ionic property of Mg²⁺. The control unit is configured to control the regeneration frequency of the ion exchange resin such that the regeneration frequency of the ion exchange resin meets the calculated regeneration frequency.

In the configuration according to some embodiments, the water treatment facility is provided with an ion exchange unit which performs treatment of adsorbing ion in the wastewater, a degassing unit which separates gas from the wastewater, and a desalination apparatus in which the wastewater is separated into regenerated water and concentrated water. The water quality estimating unit is configured to estimate an ionic property of HCO₃⁻ in influent water flowing into the desalination apparatus, based on at least one of fuel data of the plant facility and operation data of the plant facility, and to calculate operational pH of the degassing unit in which the influent water circulates, from estimated concentration of HCO₃²⁻. The control unit is configured to control the pH of the degassing unit such that the operational pH of the degassing unit meets the calculated pH.

In the configuration according to some embodiments, the water treatment facility is further provided with a silica treatment unit which removes a silica composition in the wastewater. The water quality estimating unit is configured to estimate concentration of the silica composition in the wastewater flowing into the silica treatment unit, based on at least one of fuel data of the plant facility and operation data of the plant facility. The control unit is configured to control an addition amount of a silica treatment chemical agent to be supplied to the silica treatment unit, in accordance with the concentration of the silica composition estimated by the water quality estimating unit.

In the configuration according to some embodiments, the water treatment facility is further provided with a solid-liquid separating unit which separates suspended solids from the wastewater. The water quality estimating unit is configured to estimate concentration of the suspended solids in the wastewater flowing into the solid-liquid separating unit, based on at least one of the fuel data of the plant facility and the operation data of the plant facility. The control unit is configured to control a supply quantity of a flocculant to be supplied to the solid-liquid separating unit, in accordance with the estimated concentration of the suspended solids.

The configuration according to some embodiments further includes a second operation data acquiring unit which acquires water treatment operation information of the water treatment facility after the feedforward control is performed. The control unit is configured to perform the feedback control over the operational condition for the water treatment facility based on the water treatment operation information acquired by the second operation data acquiring unit.

The configuration according to some embodiments further includes an evaporator which is configured to cause the concentrated water from the desalination apparatus to evaporate.

In the configuration according to some embodiments, the water treatment facility is an organism treatment tank. The water quality estimating unit is configured to estimate nitrogenous concentration and selenic concentration in the wastewater flowing into the organism treatment tank, based on at least one of fuel data of the plant facility and operation data of the plant facility. The control unit is configured to control at least one of a supply quantity of air to be supplied, an addition amount of a chemical agent, an addition amount of an organism, and an extraction quantity of sludge with respect to the organism treatment tank, in accordance with the estimated nitrogenous concentration or the estimated selenic concentration.

According to at least another embodiment of the present invention, there is provided a power generation plant including a power generation facility which is provided with a boiler and a flue gas treatment apparatus treating flue gas of the boiler, and a water treatment system which treats wastewater discharged from the power generation facility. The water treatment system is configured to include a water treatment facility in which the wastewater is treated, an operation data acquiring unit which acquires operation information from the power generation facility, a water quality estimating unit which estimates water quality of the wastewater based on the operation information acquired by the operation data acquiring unit, and a control unit which performs feedforward control over an operational condition for the water treatment facility based on the estimated water quality estimated by the water quality estimating unit.

According to at least further another embodiment of the present invention, there is provided a method for controlling a water treatment system provided with a water treatment facility for treating wastewater discharged from a plant facility. The method is configured to include a first operation data acquiring step of acquiring plant operation information from the plant facility, a water quality estimating step of estimating water quality of the wastewater based on information acquired in the first operation data acquiring step, and a controlling step of performing feedforward control over an operational condition for the water treatment facility based on the estimated water quality estimated in the water quality estimating step.

The configuration according to some embodiments further includes a second operation data acquiring step of acquiring water treatment operation information from the water treatment facility. The estimated water quality of the wastewater is configured to be estimated based on the plant operation information and the water treatment operation information.

The configuration according to some embodiments further includes a second operation data acquiring step of acquiring water treatment operation information of the water treatment facility after the feedforward control is performed. In the controlling step, the feedback control is configured to be performed over the operational condition for the water treatment facility based on the water treatment operation information acquired in the second operation data acquiring step.

### Advantageous Effects of Invention

According to the present invention, the water quality estimating unit estimates the water quality in wastewater as estimated water quality based on the plant operation information from the plant facility. The control unit performs the feedforward control over the operational condition for the water treatment facility, from the estimated water quality, and thus, it is possible to cope with a rapid fluctuation in water quality of the wastewater.

### Brief Description of Drawings

Fig. 1 is a block diagram illustrating a schematic configuration of a water treatment system according to Example 1.
Fig. 2 is a block diagram illustrating a schematic configuration of a different water treatment system according to Example 1.
Fig. 3 is a block diagram illustrating a schematic configuration of a different water treatment system according to Example 1.
Fig. 4 is a block diagram illustrating a schematic configuration of a different water treatment system according to Example 1.
Fig. 5 is a block diagram illustrating a schematic configuration of a different water treatment system according to Example 1.
Fig. 6 is a block diagram illustrating a schematic configuration of a different water treatment system according to Example 1.
Fig. 7 is a schematic view of a power generation facility of the water treatment system according to Example 1.
Fig. 8 is a schematic view of a desulfurization apparatus according to Example 1.
Fig. 9 is a schematic view of a water treatment facility of the water treatment system according to Example 1.
Fig. 10 is a flow chart illustrating an example of a control operation of the water treatment system.
Fig. 11 is a flow chart illustrating another example of the control operation of the water treatment system.
Fig. 12 is a schematic view illustrating a water treatment system according to Example 2.
Fig. 13 is a schematic view illustrating a different water treatment system according to Example 2.
Fig. 14 is a schematic view illustrating a water treatment system according to Example 3.
Fig. 15 is a schematic view illustrating a water treatment system according to Example 4.
Fig. 16 is a schematic view illustrating a different water treatment system according to Example 4.
Fig. 17 is a schematic view illustrating a water treatment system according to Example 5.
Fig. 18 is a schematic view illustrating a different water treatment system according to Example 5.
Fig. 19 is a schematic view illustrating a water treatment system according to Example 6.
Fig. 20 is a schematic view illustrating a water treatment system according to Example 7.
Fig. 21 is a diagram of a relationship between a pH value of desulfurized wastewater and solubility with respect to metal ions.
Fig. 22 is a diagram of a relationship between the pH value of the desulfurized wastewater and silica concentration.

### Description of Embodiments

Hereinafter, with reference to the accompanying drawings, preferable Examples of the present invention will be described in detail. The present invention is not limited by Examples. In addition, in a case where there are a plurality of Examples, the present invention also includes a configuration in which the Examples are combined.

### Example 1

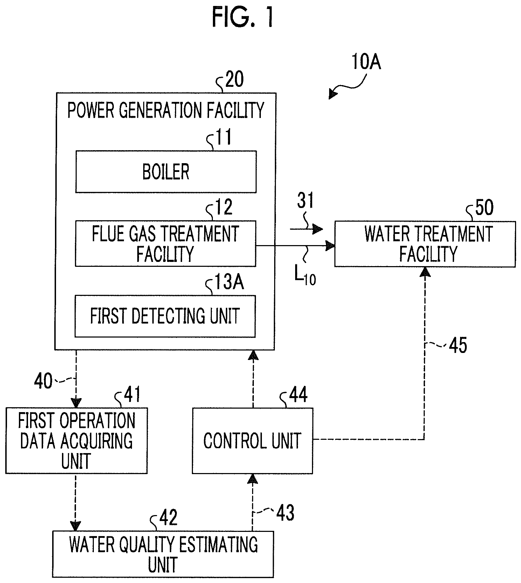

Fig. 1 is a block diagram illustrating a schematic configuration of a water treatment system according to Example 1. As illustrated in Fig. 1, a water treatment system 10A is provided with a power generation facility 20 which is a plant facility, a first operation data acquiring unit 41, a water quality estimating unit 42, a control unit 44, and a water treatment facility 50. The power generation facility 20, the first operation data acquiring unit 41, the water quality estimating unit 42, the control unit 44, and the water treatment facility 50 perform communication with each other via a communication line (not illustrated). Here, various data communication lines can be applied as the communication line. However, for example, it is preferable to employ a public line such as the internet network and a telecommunication network. The communication line may be a dedicated line. Here, in the present Example, the plant facility is described with reference to an example of a power generation facility provided with a boiler. However, the present invention is not limited thereto, and the examples of the plant facility can include facilities in an incinerator, a blast furnace, a chemical plant (for example, a sulfuric acid plant), and a kiln furnace. A desulfurization facility treats flue gas discharged from each of the facilities.

The power generation facility 20 is provided with a boiler 11, a flue gas treatment facility 12, and a first detecting unit 13A. The power generation facility 20 is a power generation facility in which fuel is supplied to the boiler 11 and combusts so as to generate heat energy, which is converted into electric power. The flue gas treatment facility 12 performs flue gas treatment for gas discharged from the boiler 11. The first detecting unit 13A includes detection equipment and the like attached to various mechanisms in the power generation facility 20, thereby detecting a running state of the power generation facility 20. The configuration of the power generation facility 20 will be described below.

The water treatment facility 50 is a facility in which wastewater 31 discharged from the power generation facility 20 is subjected to zero-discharge treatment, for example, water treatment to a level equal to or lower than an effluent restriction value with respect to the outside of the system. The configuration of the water treatment facility 50 will be described below.

The first operation data acquiring unit 41 acquires power generation operation information 40 such as data and a database from the first detecting unit 13A detecting the operational states of the boiler 11 and the flue gas treatment facility 12 in the power generation facility 20, thereby outputting the acquired result to the water quality estimating unit 42. An acquiring operation of the first operation data acquiring unit 41 will be described below.

The water quality estimating unit 42 is a computation mechanism having a computation unit such as a CPU, and storage units such as a ROM and a RAM. The water quality estimating unit 42 analyzes power generation operation information (various types of data such as first detecting unit data and database of the first detecting unit 13A) 40 which has been received via a communication device and been acquired by the first operation data acquiring unit 41. The water quality estimating unit 42 analyzes the water quality of the wastewater 31 flowing into the water treatment facility 50 and estimates estimated water quality 43 of wastewater. Specifically, the water quality estimating unit 42 estimates quality of water of when flowing into water treatment equipment of the water treatment facility 50 as the estimated water quality 43, based on information detected by the first operation data acquiring unit 41 (various types of data such as the first detecting unit data and database). In addition, the water quality estimating unit 42 determines the operational state of the water treatment facility 50 based on the state of the estimated water quality of the wastewater 31. An estimating operation of the water quality estimating unit 42 will be described below.

The control unit 44 is a computation mechanism having a computation unit such as a CPU, and storage units such as a ROM and a RAM. The control unit 44 performs feedforward (FF) control 45 over an operation of the water treatment facility 50 based on the estimated water quality obtained by the water quality estimating unit 42. In addition, the control unit 44 controls each of the units in the power generation facility 20 and the water treatment facility 50. The water treatment system 10A may be provided with a control device separately from the control unit 44 so as to control each of the units in the power generation facility 20 and the water treatment facility 50 other than the first detecting unit 13A.

The water treatment system 10A of the present Example is provided with the water treatment facility 50 which treats the wastewater 31 discharged from the power generation facility 20, the first operation data acquiring unit 41 which acquires the power generation operation information (for example, the first detecting unit data and database) from the power generation facility 20, the water quality estimating unit 42 which estimates the water quality of the wastewater 31 based on the power generation operation information 40 acquired by the first operation data acquiring unit 41, and the control unit 44 which performs the feedforward control 45 over the operational condition for the water treatment facility 50 based on the estimated water quality 43 estimated by the water quality estimating unit 42. Therefore, the water quality estimating unit 42 can obtain the estimated water quality 43 with high accuracy based on information from the operation information 40 of the power generation facility 20, and thus, the control unit 44 can perform the feedforward control coping with a rapid fluctuation in water quality of the wastewater 31.

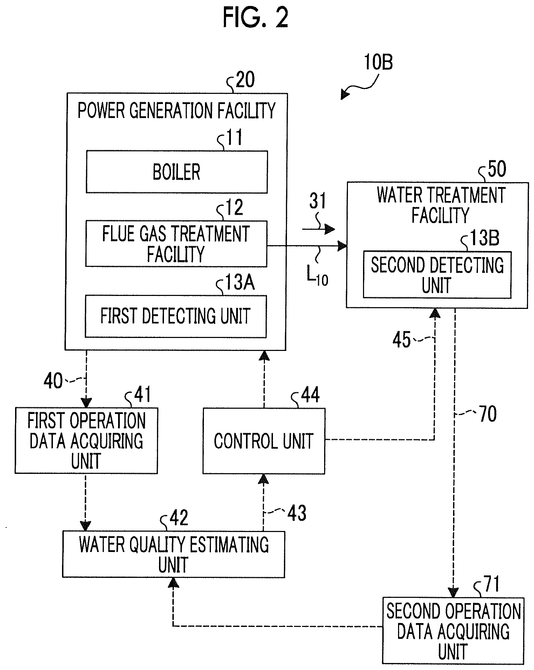

In addition to the water treatment system 10A in Fig. 1, modification examples include water treatment systems in Figs. 2 to 6. Figs. 2 to 6 are block diagrams each illustrating a schematic configuration of a different water treatment system according to Example 1.

As illustrated in a water treatment system 10B in Fig. 2, a second detecting unit 13B can be provided in the water treatment facility 50, and a second operation data acquiring unit 71 can be provided so as to acquire water treatment operation information 70 from the second detecting unit 13B. The water treatment operation information 70 acquired by the second operation data acquiring unit 71 is output to the water quality estimating unit 42. Then, the water quality estimating unit 42 estimates the water quality of the wastewater 31 as the estimated water quality 43 based on the power generation operation information 40 and the water treatment operation information 70. The control unit 44 performs the feedforward (FF) control 45 in which the operational condition for the water treatment facility 50 is added, based on the estimated water quality 43 from the water quality estimating unit 42.

Accordingly, it is possible to obtain the estimated water quality 43 with high accuracy based on operation information in which the operation information of the power generation facility 20 and the operation information of the water treatment facility 50 are combined. Thus, it is possible to cope with a rapid fluctuation in water quality of the wastewater 31.

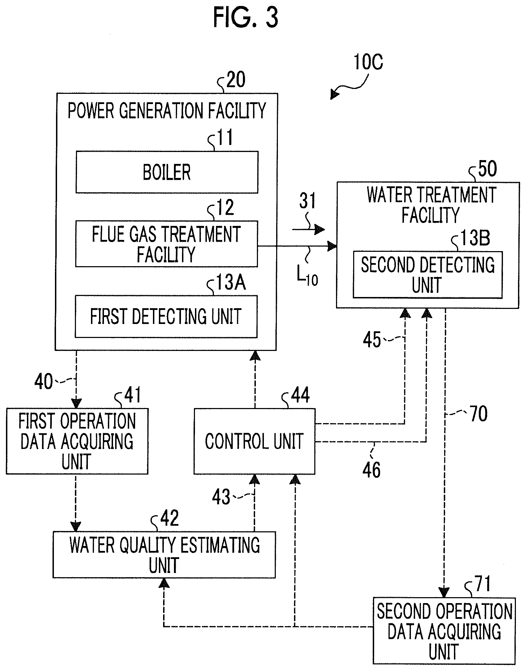

In addition, as illustrated in a water treatment system 10C in Fig. 3, similar to the water treatment system 10B in Fig. 2, the second operation data acquiring unit 71 is provided so as to acquire the water treatment operation information 70 from the water treatment facility 50, and the water treatment operation information 70 acquired by the second operation data acquiring unit 71 is output to the water quality estimating unit 42. Then, the water quality estimating unit 42 estimates the water quality of the wastewater 31 as the estimated water quality 43 based on the information of both the power generation operation information 40 and the water treatment operation information 70. The FF control 45 having the operational condition for the water treatment facility 50 added is performed based on the estimated water quality 43.

Moreover, in the water treatment system 10C, the second detecting unit 13B detects the equipment state of the water treatment facility 50 after the FF control 45 is performed based on the obtained estimated water quality 43, and the second operation data acquiring unit 71 acquires the water treatment operation information 70 for the water treatment facility 50 after the FF control 45 is performed. The water treatment operation information 70 of the second operation data acquiring unit 71 is output to the control unit 44. Then, the control unit 44 determines whether or not the FF control over the water treatment facility 50 performed based on the estimated water quality 43 is appropriate, thereby performing feedback (FB) control 46 over the determined result.

Accordingly, it is possible to determine whether or not the operation of the water treatment facility 50 performed after the feedforward (FF) control 45 is appropriate. In a case where the operation is not appropriate, an operation corrected through the feedback (FB) control can be executed. Thus, it is possible to more unerringly cope with a rapid fluctuation in water quality of the wastewater 31.

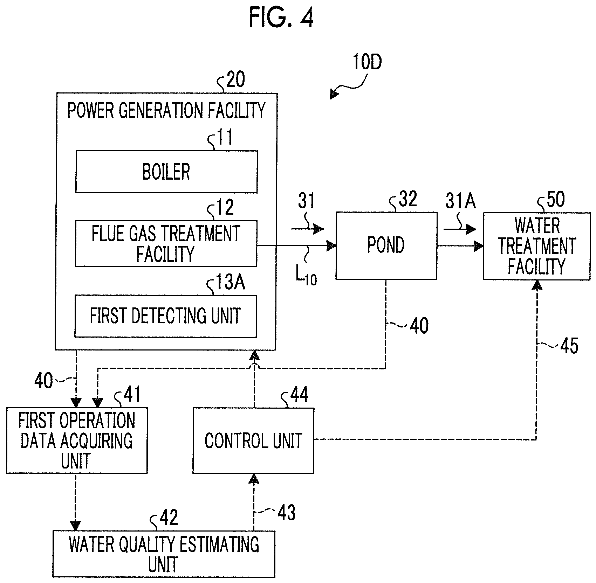

In addition, as illustrated in a water treatment system 10D in Fig. 4, it is possible to provide a pond 32 which temporarily stores a large amount of wastewater with respect to the wastewater 31 flowing into the water treatment facility 50. Pond wastewater 31A which is discharged after being temporarily stored in the pond 32 is subjected to water treatment in the water treatment facility 50.

In this case, in a case of estimating the property of the pond wastewater 31A, as described above, in addition to the power generation operation information 40 of the power generation facility 20, there is a need to add the water quality information which varies while being stored in the pond 32. Thus, in a case where the pond 32 is installed and a large amount of wastewater 31 is stored, the first operation data acquiring unit 41 acquires information from the pond 32 and outputs the acquired information to the water quality estimating unit 42. Then, the water quality estimating unit 42 estimates the water quality of the pond wastewater 31A flowing into the water treatment facility 50 as the estimated water quality 43, based on the information from the power generation facility 20 and the pond 32. Here, examples of the pond 32 include an evaporation pond and an ash pond. However, the present invention is not limited thereto as long as the wastewater 31 is temporarily stored and kept.

Here, in regard to the wastewater 31 flowing into the pond 32, all sorts of wastewater flow into the pond 32 from not only a desulfurization apparatus 27 of the power generation facility 20 but also this plant facility, other plant facilities, and the like. For example, the inflow wastewater includes regenerated wastewater and the like from a condensate desalination apparatus which regenerates blowdown water of a cooling tower or an ion exchange resin of an ion exchange resin unit. In a case where the pond 32 is installed, it is important to grasp the property and the flow rate of the wastewater 31 when performing the feedforward control.

Accordingly, it is possible to estimate the water quality of the pond wastewater 31A flowing into the water treatment facility 50 of when the wastewater 31 discharged from the power generation facility 20 is temporarily stored in the pond 32. Thus, it is possible to execute unerring water treatment coping with a fluctuation in water quality of the pond wastewater 31A.

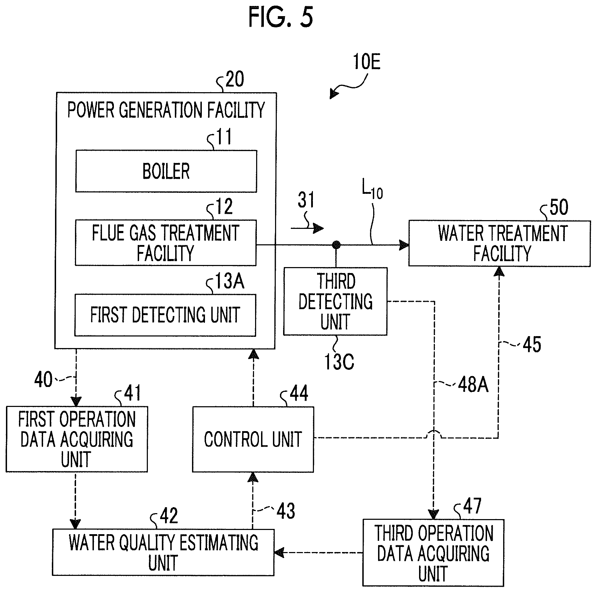

As illustrated in a water treatment system 10E in Fig. 5, it is possible to provide a pipe line L₁₀ through which the wastewater 31 is introduced from the power generation facility 20 to the water treatment facility 50, a third detecting unit 13C which detects the water quality of the wastewater 31 passing through the inside of the pipe line L₁₀, and a third operation data acquiring unit 47 which acquires water quality information (the wastewater property, the wastewater flow rate, and changes thereof) 48A from the third detecting unit 13C.

The third detecting unit 13C detects the water quality information 48A of the wastewater 31 discharged from the power generation facility 20 and sends the detection result to the third operation data acquiring unit 47. Then, data acquired by the third operation data acquiring unit 47 is sent to the water quality estimating unit 42. Then, the water quality estimating unit 42 estimates the water quality of the wastewater 31 to be introduced to the water treatment facility 50, as the estimated water quality 43 along with the information from the first operation data acquiring unit 41.

Accordingly, based on the water quality information of the wastewater 31 to be introduced to the water treatment facility 50 in addition to the power generation operation information 40 of the power generation facility 20, the water quality estimating unit 42 estimates the estimated water quality 43 of the wastewater 31 to be introduced to the water treatment facility 50, and the feedforward (FF) control 45 is performed with higher accuracy.

As a result, based on the operation information in which the power generation operation information 40 of the power generation facility 20 and the water quality information of the wastewater 31 to be introduced to the water treatment facility 50 are combined, the estimated water quality 43 with high accuracy can be obtained. Thus, it is possible to cope with a rapid fluctuation in water quality of the wastewater 31.

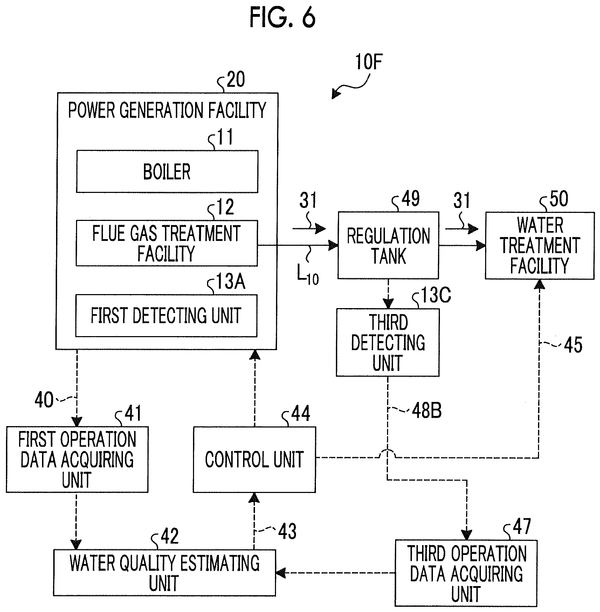

As illustrated in a water treatment system 10F in Fig. 6, it is possible to provide a regulation tank 49 between the power generation facility 20 and the water treatment facility 50 so as to serve as a facility which temporarily stores desulfurized wastewater 31B. The third detecting unit 13C detects water quality information 48B from the regulation tank 49 and sends the detection result to the third operation data acquiring unit 47. The water quality estimating unit 42 estimates the water quality of the wastewater 31, thereby grasping the water quality of the wastewater 31 discharged from the regulation tank 49.

Then, water quality states of the wastewater 31 flowing into the regulation tank 49 and the wastewater 31 discharged from the regulation tank 49 are sent to the third operation data acquiring unit 47 as detection items. The water quality estimating unit 42 obtains the estimated water quality 43 along with the power generation operation information 40 acquired by the first operation data acquiring unit 41, and the feedforward (FF) control 45 is performed with higher accuracy, in which the water quality of the wastewater 31 discharged from the regulation tank 49 is added.

Accordingly, it is possible to obtain the estimated water quality 43 with high accuracy based on the operation information in which the power generation operation information 40 of the power generation facility 20 and the water quality information of the regulation tank 49 are combined. Thus, it is possible to cope with a rapid fluctuation in water quality of the wastewater 31.

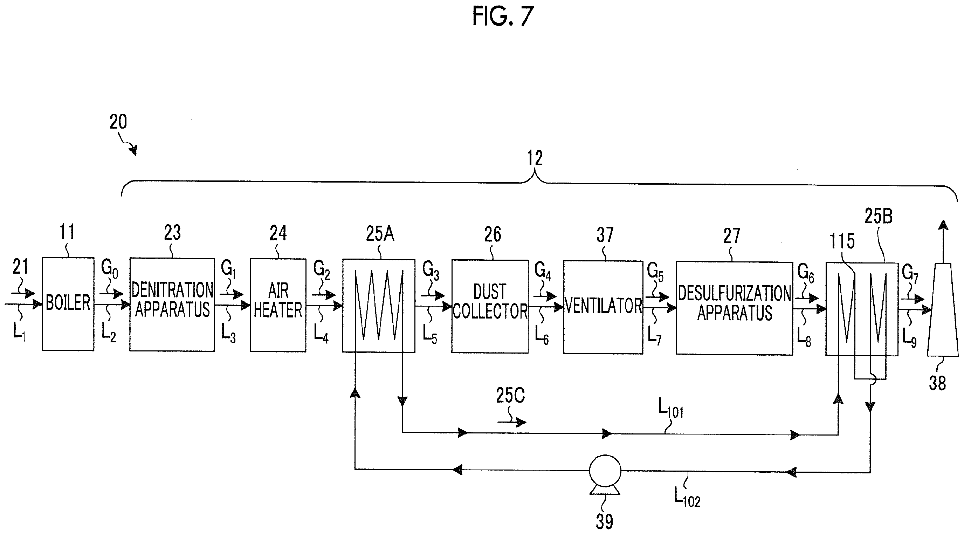

Next, an example of the power generation facility 20 will be described using Fig. 7. Fig. 7 is a schematic view of a power generation facility of the water treatment system according to Example 1. In Fig. 7, the first detecting unit 13A is not illustrated. The detection items of the first detecting unit 13A will be described separately.

As illustrated in Fig. 7, the power generation facility 20 is provided with the boiler 11 in which fuel 21 combusts, and the flue gas treatment facility 12 which treats flue gas Go discharged from the boiler 11. In the boiler 11, the fuel 21 or the like combust, and heated gas is generated. Heat of the gas heated in the boiler 11 is absorbed by a mechanism in which heat energy is converted into electric power. The gas having heat absorbed is discharged to the flue gas treatment facility 12 as the flue gas G₀.

In a process in which flue gas discharged from the boiler 11 is released through a smokestack 38, the flue gas treatment facility 12 removes nitrogen oxide (NOx), soot, dust, and sulfur oxide (SOx) contained in the flue gas. For example, the flue gas treatment facility 12 is provided with a denitration apparatus 23, an air heater 24, a heat exchanger (heat recovery device) 25A, a dust removing apparatus (for example, an electric dust collector and a bag filter) 26, a ventilator 37, the desulfurization apparatus 27, a heat exchanger (reheater) 25B, a circulation pump 39, the circulation pipe lines L₁₀₁ and L₁₀₂, and the smokestack 38. The flue gas treatment facility 12 illustrated in Fig. 7 is an example, and the present invention is not limited thereto. It is possible to suitably increase or reduce devices required for processing flue gas. Here, in Fig. 7, the reference signs L₁ to L₉ indicate flue gas lines for supplying flue gas. In the present Example, the equipment configuration of the flue gas treatment facility 12 is an example, and the present invention is not limited thereto. As necessary, the configuring equipment may be removed, and additional flue gas treatment equipment may be suitably installed.

The flue gas G₀ discharged from the boiler 11 is introduced to the denitration apparatus 23 filled with a catalyst. In the denitration apparatus 23, nitrogen oxide contained in the flue gas G₀ is reduced to water and nitrogen due to ammonia gas (NH₃), for example, which is injected as a reductant, thereby being detoxified.

Flue gas G₁ discharged from the denitration apparatus 23 passes through the air heater (AH) 24 and is cooled to a temperature generally ranging from 130°C to 150°C.

Flue gas G₂ which has passed through the air heater 24 is introduced to the heat exchanger 25A, that is, a gas-gas heater serving as the heat recovery device and is subjected to heat exchange with a heating medium (for example, warm water) flowing in a finned tube which is inserted into the heat recovery device, so that heat recovery is achieved. The temperature of flue gas G₃ which has passed through the heat exchanger 25A serving as the heat recovery device generally ranges from 85°C to 110°C. For example, dust collecting performance of the dust removing apparatus 26 is improved.

The flue gas G₃ which has passed through the heat exchanger 25A is introduced to the dust removing apparatus 26, and soot and dust are removed.

Flue gas G₄ which has passed through the dust removing apparatus 26 is increased in pressure by the ventilator 37 driven by an electric motor (not illustrated). There are cases where no ventilator 37 is provided, and there are cases where the ventilator 37 is disposed at a position of a flue gas line L₉ in which purified gas G₇ flows downstream of the reheater 25B, that is, a gas-gas heater.

Flue gas G₅ which has been increased in pressure by the ventilator 37 is introduced to the desulfurization apparatus 27. In the desulfurization apparatus 27, for example, sulfur oxide (SOx) in the flue gas G₅ is absorbed and removed using alkali or weak-alkali absorbent slurry in which limestone is dissolved in a slurry state. In a case where absorbent slurry having limestone dissolved in a slurry state is employed in the desulfurization apparatus 27, gypsum is generated as a by-product. Then, the temperature of flue gas G₆ which has passed through the desulfurization apparatus 27 generally falls to approximately 50°C.

The flue gas G₆ which has passed through the desulfurization apparatus 27 is introduced to the heat exchanger 25B, that is, a gas-gas heater serving as a reheater. In the heat exchanger 25B serving as a reheater, during a process in which the heating medium circulation pump 39 causes a heating medium 25C to reciprocate and circulate through the pair of heating medium circulation pipe lines L₁₀₁ and L₁₀₂ with respect to the heat exchanger 25A serving as the above-described heat recovery device, the flue gas G₆ is heated due to recovery heat recovered by the heat exchanger 25A. Here, the flue gas G₆ having a temperature of approximately 50°C at the outlet of the desulfurization apparatus 27 is reheated by the heat exchanger 25B to a temperature ranging approximately from 85°C to 110°C and is subjected to blue smoke countermeasure, thereby being released into the atmosphere through the smokestack 38.

In the present Example, coal which is solid fuel is employed as fuel. However, in addition to coal, it is possible to employ solid fuel such as brown coal, biomass, coke, general waste, and refuse-derived fuel. In addition, liquid fuel such as heavy oil may be employed.

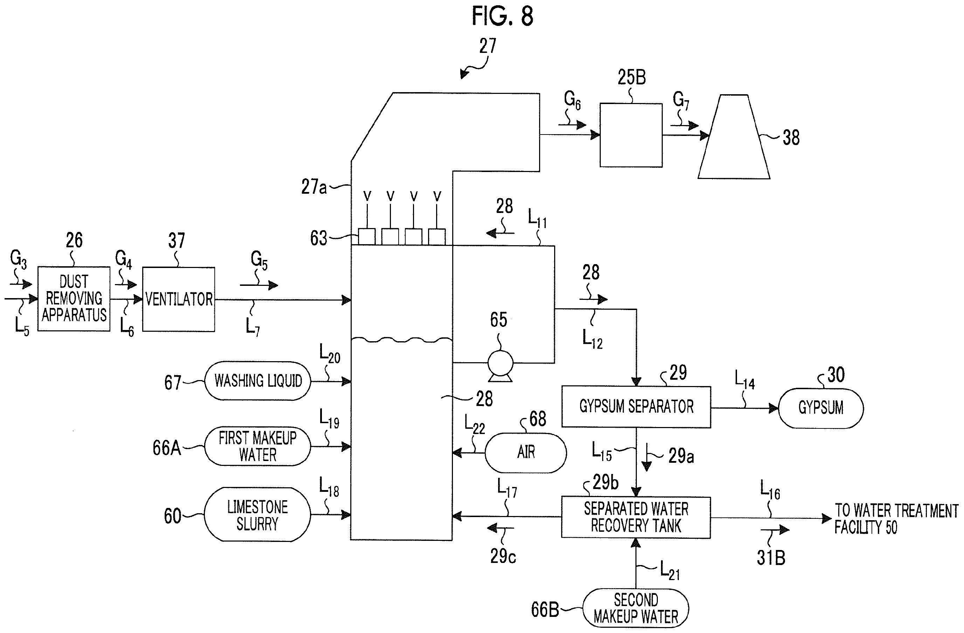

Fig. 8 is a schematic view of a desulfurization apparatus according to Example 1. The desulfurization apparatus 27 includes an absorption tower 27a in which the absorbent slurry and the flue gas are brought into gas-liquid contact with each other, an absorbent circulation line L₁₁ through which absorbent slurry 28 circulates, and nozzles 63 spouting the circulating absorbent slurry 28. Here, as an absorbent, for example, limestone slurry (an aqueous solution obtained by causing limestone powder to be dissolved in water) 60 is supplied to the absorption tower 27a through a supply line L₁₈ and is supplied to a reservoir within the bottom portion of the absorption tower 27a. Liquid stored in the tower bottom portion of the absorption tower 27a is pumped so as to be employed as the limestone slurry 60. As described below, gypsum (CaSO₄·2H₂O) is mixed with the pumped limestone slurry 60 in response to an operation of the desulfurization apparatus 27. Hereinafter, the limestone gypsum slurry (limestone slurry mixed with gypsum) for absorbing sulfurous acid gas will be called the absorbent slurry 28.

The absorbent slurry 28 supplied to the absorption tower 27a is sent to the plurality of nozzles 63 inside the absorption tower 27a via the absorbent circulation line L₁₁, and the nozzles 63 spout the absorbent slurry 28 upward toward the tower apex portion side in forms of liquid columns. A liquid feeding pump 65 is provided in the absorbent circulation line L₁₁. When the liquid feeding pump 65 is driven, the absorbent slurry 28 is sent to the nozzles 63 through the absorbent circulation line L₁₁. The flue gas G₅ is introduced into the absorption tower 27a within a space of the tower bottom portion of the absorption tower 27a through a flue gas line L₅ and rises thereafter. Then, the flue gas G₅ comes into gas-liquid contact with the absorbent slurry 28 which the nozzles 63 spout. Due to the gas-liquid contact, sulfur oxide and mercury chloride in the flue gas G₅ are absorbed by the limestone in the absorbent slurry 28, thereby being separated and removed from the boiler flue gas G₅. The flue gas G₆ purified by the absorbent slurry 28 is discharged as purified gas from the tower apex portion side of the absorption tower 27a and passes through the heat exchanger 25B, thereby being released outside through the smokestack 38.

Inside the absorption tower 27a, sulfurous acid gas SO₂ in the flue gas G₅ reacts with the limestone slurry as expressed in the following Expression (1).

SO₂ + CaCO₃ → CaSO₃ + CO₂ ... (1)

Moreover, limestone slurry which has absorbed SOx in the flue gas G₅ is subjected to oxidation treatment by the air in the absorbent slurry 28 or separately supplied air (not illustrated) and reacts with the air as expressed in the following Expression (2).

CaSO₃ + 1/2O₂ + 2H₂O → CaSO₄·2H₂O ... (2)

In this manner, SOx in the flue gas G₅ is captured in a form of gypsum (CaSO₄·2H₂O) in the absorption tower 27a.

The absorbent slurry 28 employed in desulfurization of the desulfurization apparatus 27 circulates and is reused through the absorbent circulation line L₁₁ of the absorption tower 27a. The absorbent slurry 28 is partially discharged outside via an absorbent discharge line L₁₂ connected to the absorbent circulation line L₁₁ and is sent to a gypsum separator 29 provided separately, thereby being subjected to dehydrating treatment herein. Separated water 29a which has been subjected to solid-liquid separation by the gypsum separator 29 contains toxic heavy metals, for example, mercury, arsenicum, and selenium; metals, for example, Fe²⁺ and Mn²⁺; halide ion, for example, Cl⁻, Br⁻, I⁻, and F⁻; sulfate ion (SO₄²⁻); Ca²⁺; Mg²⁺; SiO₂; and N-compounds (NH₄⁺, NO₃⁻, NO₂⁻). The property of desulfurized wastewater will be described below in detail.

The gypsum separator 29 causes gypsum 30 which is a solid matter in the absorbent slurry 28 to be separated from the separated water (filtrate) 29a which is liquid. As the gypsum separator 29, for example, a belt filter, a centrifugal separator, a decanter-type centrifugal precipitator, or a liquid cyclone is employed. A combination of at least two devices thereof may be employed. Thus, the absorbent slurry 28 which has partially discharged from the absorption tower 27a of the desulfurization apparatus 27 is separated by the gypsum separator 29 into the gypsum 30 which is a solid matter, and the separated water 29a which is a dehydrated filtrate. The gypsum 30, which is a solid matter, and the separated water 29a which have been separated from each other are discharged out of the system via a solid matter discharge line L₁₄ and a liquid discharge line L₁₅.

The separated water 29a discharged through the liquid discharge line L₁₅ is primarily stored in a separated water storage tank 29b and is supplied to the water treatment facility 50 via a supply line L₁₆, as the desulfurized wastewater 31B. Thereafter, the separated water 29a is subjected to water treatment.

In addition, a part of the separated water 29a returns to the tower bottom portion of the absorption tower 27a via a recovery line L₁₇, as recovery water 29c, thereby being utilized as a part of makeup water. There are cases where the separated water 29a is directly supplied to the water treatment facility 50 without installing the separated water storage tank 29b.

First makeup water (for example, industrial water and recovery water) 66A and washing liquid 67 for washing are supplied to the tower bottom portion of the absorption tower 27a from the outside via a first makeup water line L₁₉ and a washing liquid line L₂₀ respectively. In addition, second makeup water 66B is supplied to the separated water storage tank 29b via a second makeup water line L₂₁, Due to the added water, there are cases where the water balance fluctuates. The water balance will be described below.

The above-described Example illustrates a liquid column tower-type spouting unit in which the nozzles 63 such as spray nozzles upwardly spout the absorbent slurry 28 for absorbing sulfur oxide in the flue gas G₅ and spouting droplets fall. However, the present invention is not limited thereto. For example, the present invention can also be applied to a spray tower-type spouting unit in which an absorbent directly falls downward as droplets from spray nozzles or the like.

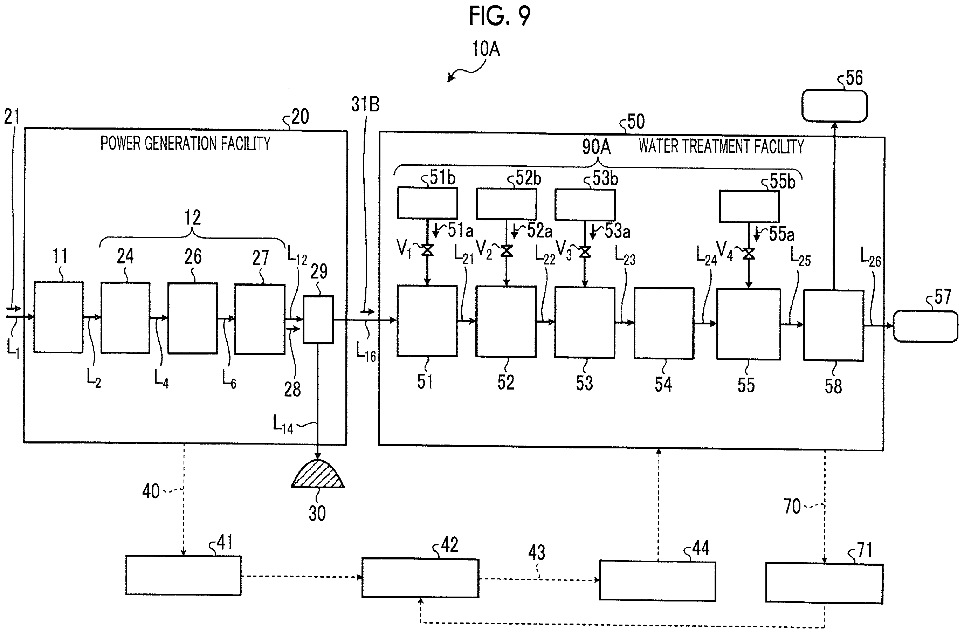

Next, an example of the water treatment facility 50 will be described using Fig. 9. Fig. 9 is a schematic view of a water treatment facility of the water treatment system according to Example 1. In Fig. 9, the first detecting unit 13A and the second detecting unit 13B are not illustrated. The detection items of the first detecting unit 13A and the second detecting unit 13B will be described separately.

As illustrated in Fig. 9, a water treatment system 100A is provided with the power generation facility 20 and the water treatment facility 50 in which the desulfurized wastewater 31B discharged from the desulfurization apparatus 27 of the power generation facility 20 is subjected to water treatment.

The water treatment facility 50 is provided with an oxidation treatment unit 51 which performs oxidation treatment for metal compositions in the wastewater 31, a silica treatment unit 52 which supplies a chemical agent 52a to the wastewater 31 after the oxidation treatment and treats a silica composition, a flocculent sedimentation unit 53 which is provided on a downstream side of the silica treatment unit 52 and causes solids in the wastewater 31 to be separated through flocculent sedimentation, a filtration unit 54 which causes solids in the wastewater 31 to be separated, a scale inhibitor adding unit 55 which is provided on a downstream side of the filtration unit 54 and adds a scale inhibitor 55a in the wastewater 31, and a desalination apparatus 58 which is provided on a downstream side of the scale inhibitor adding unit 55, removes salt in the wastewater 31 through desalination treatment, and separates the wastewater 31 into the regenerated water 56 and the concentrated water 57. In Fig. 9, the reference signs L₂₁ to L₂₅ indicate wastewater lines for supplying wastewater, and the reference sign L₂₆ indicates a line for concentrated water. In the present Example, the oxidation treatment unit 51, the silica treatment unit 52, the flocculent sedimentation unit 53, the filtration unit 54, and the scale inhibitor adding unit 55 configure a pretreatment unit 90A in which influent water flowing into the desalination apparatus 58 is subjected to pretreatment according to a predetermined standard. However, the pretreatment unit is not limited to this configuration.

The oxidation treatment unit 51 supplies a predetermined amount of oxidant 51a from an oxidant supply unit 51b as necessary. The oxidation treatment unit 51 supplies the oxidant 51a such as air and oxygen to the inside of an oxidation tank in which the wastewater 31 has flowed, so that the metal compositions (for example, iron (Fe) and manganese (Mn)) in the wastewater 31 are oxidized. In this oxidation treatment, for example, soluble Fe²⁺ and Mn²⁺ become insoluble Fe(OH)₃ and MnO₂. A separating unit (not illustrated) promotes precipitation during the separation and the removal, so that the efficiency of removing the metal compositions is improved. The metal compositions are contained in soot and dust. The concentration of soot and dust fluctuates depending on the operational condition for the power generation facility side. Here, the addition amount of the oxidant 51a from the oxidant supply unit 51b is controlled by the control unit 44 via a valve V₁. Accordingly, the oxidation treatment unit 51 can control the performance of oxidizing heavy metal.

The silica treatment unit 52 supplies a predetermined amount of silica treatment chemical agent 52a from a silica treatment agent supply unit 52b as necessary. When the silica treatment chemical agent 52a is added, the silica treatment unit 52 removes silica in the wastewater 31.

As the silica treatment chemical agent 52a, for example, it is possible to employ sodium aluminate (sodium tetrahydroxide aluminate), an iron chloride solution, and a macromolecular flocculent polymer. Here, the addition amount of the silica treatment chemical agent 52a from the silica treatment agent supply unit 52b is controlled by the control unit 44 via a valve V₂. Accordingly, the silica treatment unit 52 can control the performance of removing silica.

The flocculent sedimentation unit 53 supplies a predetermined amount of flocculant 53a from a flocculant supply unit 53b as necessary. The flocculent sedimentation unit 53 adds the flocculant 53a in the wastewater 31 which has been subjected to silica treatment and performs treatment of flocculent sedimentation. As the flocculant added by the flocculent sedimentation unit 53, for example, a macromolecular flocculant or an iron-based flocculant (ferric chloride (FeCl₃) or the like) can be employed.

Here, the addition amount of the flocculant 53a from the flocculant supply unit 53b is controlled by the control unit 44 via a valve V₃.

The filtration unit 54 causes a sediment from the flocculent sedimentation performed by the flocculent sedimentation unit 53 to be separated. As the filtration unit 54, for example, it is possible to employ a device performing separation treatment for a sediment, such as a UF membrane, a NF membrane, and a MF membrane.

The scale inhibitor adding unit 55 supplies a predetermined amount of scale inhibitor 55a from a scale inhibitor supply unit 55b as necessary. The scale inhibitor 55a supplied to the wastewater 31 has a function of suppressing the growth of crystal nucleuses in the wastewater 31 and suppressing the growth of crystal by being adsorbed onto the surfaces of the crystal nucleuses contained in the wastewater 31 (seed crystal, scale which has a small diameter and is deposited exceeding the concentration of saturation, and the like). In addition, the scale inhibitor 55a also has a function of dispersing (preventing deposition of) particles in water, such as deposited crystal. In regard to the scale inhibitor 55a, as a calcium scale inhibitor in a case of preventing calcium containing scale from being deposited in the wastewater 31, for example, there are a phosphonic acid-based scale inhibitor, a polycarboxylic acid-based scale inhibitor, and a mixture thereof. In addition, in a case where magnesium is contained in the wastewater 31, as a magnesium scale inhibitor in a case of preventing magnesium containing scale from being deposited in the wastewater 31, for example, there is a polycarboxylic acid-based scale inhibitor.

Here, the addition amount of the scale inhibitor 55a from the scale inhibitor supply unit 55b is controlled by the control unit 44 via a valve V₄. Accordingly, the scale inhibitor adding unit 55 can control the performance of preventing scale.

As the desalination apparatus 58, for example, it is possible to employ a reverse osmosis membrane device (RO) including a reverse osmosis (RO) membrane. The desalination apparatus 58 causes the wastewater 31, which has been subjected to pretreatment such as oxidation treatment, silica treatment, and flocculent sedimentation treatment, to permeate the reverse osmosis membrane and to be separated into the regenerated water 56 and the concentrated water 57. In a case where a reverse osmosis membrane device is employed, the control unit 44 controls the pressure and the flow rate of supply water. In addition, a pH meter measuring pH of the supply water may be provided so as to suitably regulate pH. Accordingly, the desalination apparatus 58 can control the water recovery rate.

In addition, after the desalination apparatus 58 is operated for a predetermined time, the reverse osmosis (RO) membrane is subjected to washing treatment using a washing agent.

In the water treatment facility 50, as long as the wastewater 31 can be subjected to desalination treatment and can be refined, an apparatus refining water to be treated and using a method other than the filtration method with the reverse osmosis membrane may be employed. As the apparatus refining water to be treated, for example, it is possible to employ a nano-filtration membrane (NF), an electrodialyzer (ED), a polarity reversal-type electrodialyzer (EDR), an electrodeionizer (EDI), a capacitive deionizer (CDI), a deposition device, and an ion exchange resin.

Here, in regard to the separated concentrated water 57, an evaporator for regenerating water may be provided. Steam from the evaporator is condensed and becomes regenerated water. Moreover, concentrated water concentrated in the evaporator may generate sludge, for example, by using a crystallizer.

In addition, for example, the concentrated water 57 may be separately treated after moisture is removed using a dehydrator or a dryer. In addition, the concentrated water 57 may be subjected to cement solidification treatment.

In addition, the regenerated water 56 after being regenerated can serve as makeup water inside the plant or as drinking water after being additionally refined.

Next, the detection items of the power generation facility 20 side illustrated in Fig. 7 will be described.

In regard to the fuel 21 supplied to the boiler 11 of the power generation facility, the type of the fuel 21 and the property of the fuel 21 become the detection items. For the type and the property of the fuel 21, data of the fuel 21 for each lot, each type, each origin, and the like is separately accumulated as a database when the fuel 21 is carried in or in advance. In addition, in a case where the fuel is periodically analyzed, results of the composition analysis is accumulated in the database. Combustion of the boiler is calculated by the control unit 44 or the water quality estimating unit 42 based on the information of the database. For example, the concentration of HCl in the flue gas is computed for each coal type. Consequently, the concentration of hydrogen chloride gas is estimated, and the estimated result can be employed as the detection item.

Here, in an example of employing coal as the fuel 21, in regard to the detection items of the composition of coal, for example, characteristics, elemental components, and the composition of ash become the detection items. In addition, in regard to the detection items of the composition of the characteristics of coal, for example, the calorific value, the total moisture content, the inherent moisture content, the ash content, the volatile content, the fixed carbon, the total sulfur content, HGI, the softening point of ash, the ash melting point, and the ash fluid point become the detection items. In addition, in regard to the detection items of the elemental components of coal, carbon, hydrogen, oxygen, nitrogen, sulfur, phosphorus, chlorine, fluorine, selenium, boron, mercury, silicon, aluminum, iron, calcium, potassium, manganese, sodium, phosphorus, titanium, and the like become the detection items.

For example, in a case where coal is employed as the fuel 21 to be supplied to the boiler 11, for example, the supply quantity of coal, the supply rate of coal, the mixture ratio of different types of coal, the chemical agent (for example, halogenated compound) supplied concentration, the supply rate of the chemical agent (halogenated compound), and the chemical agent (alkali agent) supplied concentration become the detection items. Here, the halogenated compound is inserted as a chemical agent for the countermeasures of removing mercury (Hg). Examples of the halogenated compound include chloride calcium (CaCl₂) and calcium bromide (CaBr₂). In addition, the alkali agent is inserted as a chemical agent for carrying out in-furnace desulfurization. Examples of the alkali agent include calcium hydroxide (Ca(OH)₂) and calcium oxide (CaO).

The first operation data acquiring unit 41 acquires the detection items of the properties of the fuel, as the power generation operation information 40. In addition, the detection items may be separately accumulated in the database (the same applies to the detection items described below).

Next, in the boiler 11 in which the fuel 21 combusts, the first operation data acquiring unit 41 acquires the state of the boiler load, the combustion temperature, and the air ratio, as the power generation operation information 40.

The flue gas G₀ from the boiler 11 is sent to the denitration apparatus 23 and is subjected to denitration treatment. In regard to the state of the flue gas G₀, the state of the flue gas supplied to the denitration apparatus 23 and the supply state of the chemical agent become the detection items.

In regard to the detection items thereof, for example, the temperature of the flue gas, the quantity of the flue gas, the chemical agent (ammonia (NH₃)) supplied concentration, the supply rate of the chemical agent (ammonia (NH₃)), the chemical agent (ammonium chloride (NH₄Cl)) supplied concentration, and the supply rate of the chemical agent (NH₄Cl) become the detection items. The denitration chemical agents include gaseous ammonia, liquid ammonium, ammonium chloride, and urea. However, the examples are not limited thereto.

The first operation data acquiring unit 41 acquires the detection items thereof as the power generation operation information 40 of the flue gas G₀ introduced to the denitration apparatus 23.

In regard to the denitration apparatus 23 which decomposes nitrogen oxide in the flue gas G₀, the denitration rate, the denitration temperature, and the like become the detection items. The first operation data acquiring unit 41 acquires the detection items thereof as the power generation operation information 40 of the operational condition for the denitration apparatus 23.

The flue gas G₁ from the denitration apparatus 23 is sent to the air heater 24 and heats the air, for example, which is supplied from outside and is supplied to the boiler 11. In regard to the state of the flue gas G₁, the state of the flue gas supplied to the air heater 24 and the supply state of the chemical agent become the detection items.

In regard to the detection items thereof, for example, the temperature of the flue gas, the quantity of the flue gas, the concentration of nitrogen oxide (NOx), the concentration of hydrogen chloride (HCl), the concentration of the chemical agent (ammonia (NH₃)), and the pressure become the detection items. The first operation data acquiring unit 41 acquires the detection items thereof as the power generation operation information 40 of the flue gas G₁ introduced to the air heater 24.

In the air heater 24, the fallen temperature becomes the detection item. In regard to the detection items thereof, for example, the temperature of the flue gas and the quantity of the flue gas become the detection items. The first operation data acquiring unit 41 acquires the detection items thereof as the power generation operation information 40 of the operational condition for the air heater 24.

The flue gas G₂ from the air heater 24 is sent to the heat exchanger (heat recovery device) 25A and is subjected to heat exchange with a heating medium (for example, warm water or gas), so that heat recovery is achieved. In regard to the state of the flue gas G₂, the state of the flue gas supplied to the heat exchanger (heat recovery device) 25A, and the like become the detection items. The first operation data acquiring unit 41 acquires the detection items thereof as the power generation operation information 40 of the flue gas G₂ introduced to the heat exchanger 25A.

In regard to the heat exchanger (heat recovery device) 25A, the heat recovery rate and the temperature become the detection items. The first operation data acquiring unit 41 acquires the detection items thereof as the power generation operation information 40 of the operational condition for the heat exchanger 25A.

The flue gas G₃ from the heat exchanger (heat recovery device) 25A is sent to the dust removing apparatus 26, and soot and dust in the flue gas G₃ are removed. In regard to the state of the flue gas G₃, for example, in a case where an electric dust collector is employed as the dust removing apparatus 26, the temperature of the flue gas supplied to the electric dust collector, the quantity of the flue gas, the volume of moisture in the flue gas, the concentration of soot and dust, the particle size distribution of soot and dust, the chemical agent (adsorbent) supplied concentration, and the supply rate of the chemical agent (adsorbent) become the detection items. Here, the adsorbent is inserted as a chemical agent for the countermeasures of removing mercury (Hg). Examples of the adsorbent include activated charcoal (AC). The first operation data acquiring unit 41 acquires the detection items thereof as the power generation operation information 40 of the flue gas G₃ introduced to the dust removing apparatus 26.

In regard to the electric dust collector, the dust removing rate, the field intensity, the temperature, the voltage, the current density, and the like become the detection items. The first operation data acquiring unit 41 acquires the detection items thereof as the power generation operation information 40 of the operational condition for the dust removing apparatus 26.

The flue gas G₄ from the electric dust collector is increased in pressure by the ventilator 37, and the flue gas G₅ which has been increased in pressure is sent to the desulfurization apparatus 27. Then, sulfur oxide (SOx) in the flue gas G₅ is removed. In regard to the state of the flue gas G₅, the flue gas temperature of the flue gas G₅ supplied to an inlet of the desulfurization apparatus 27, the quantity of the flue gas, the volume of moisture in the flue gas, the concentration of soot and dust, the concentration of sulfur dioxide (SO₂), the concentration of hydrogen chloride (HCl), the concentration of mercury (Hg), and the like become the detection items. The first operation data acquiring unit 41 acquires the detection items thereof as the power generation operation information 40 of the flue gas G₅ introduced to the desulfurization apparatus 27.

In regard to the desulfurization apparatus 27, the desulfurization rate, the concentration of Cl, the liquid level of an absorbent slurry storing unit, the temperature of the absorbent slurry, pH, ORP, the electric conductivity, the ionic strength, the concentration of slurry, the quantity of the absorbent slurry, and the like become the detection items. The first operation data acquiring unit 41 acquires the detection items thereof as the power generation operation information 40 of the operational condition for the desulfurization apparatus 27.

The flue gas G₆ from the desulfurization apparatus 27 is sent to the heat exchanger (reheater) 25B and is subjected to heat exchange. Thereafter, the flue gas G₆ is discharged from the smokestack 38. In regard to the state of the flue gas G₆, the temperature of the flue gas, the quantity of the flue gas, the pressure, the volume of moisture in the flue gas, the concentration of SO₂, the concentration of HCl, the concentration of Hg, and the like become the detection items. The first operation data acquiring unit 41 acquires the detection items thereof as the power generation operation information 40 of the flue gas G₆ discharged from the desulfurization apparatus 27.

The detection items thereof are detected by the first detecting unit 13A (not illustrated), and the water quality estimating unit 42 utilizes the power generation operation information 40, which is detection data thereof, as information for estimating the estimated water quality 43 of the wastewater 31 flowing into the water treatment facility 50. The control unit 44 performs the feedforward control 45 over the operational condition for the water treatment facility 50 based on the estimated water quality 43 which has been estimated.

Next, the detection items of the desulfurization apparatus illustrated in Fig. 8 will be additionally described.

Inside the absorption tower 27a of the desulfurization apparatus 27, the absorbent slurry 28 and the introduced flue gas G₅ come into gas-liquid contact with each other, and sulfur oxide in the flue gas is removed. In this case, as described in Fig. 8, the flue gas G₅ is introduced to the absorption tower 27a, and the absorbent slurry 28 for desulfurization circulates, so that sulfur oxide in the flue gas G₅ is subjected to desulfurization treatment through gas-liquid contact.

In this case, the property and the flow rate of each of the absorbent slurry 28 extracted from the absorption tower 27a, the separated water 29a, the limestone slurry 60, the first and second makeup water 66A and 66B, the washing liquid 67, the gypsum 30, and the desulfurized wastewater 31B become the detection items.

Here, in regard to the detection items of the absorbent slurry 28, for example, the extraction amount, the extraction speed, the temperature, pH, the oxidation reduction potential (ORP), the electric conductivity, and the concentration of slurry become the detection items.

In regard to the detection items of the separated water 29a, for example, the supply quantity of the separated water, the property of the separated water, the temperature, pH, and the content rate of the gypsum become the detection items.

In regard to the detection items of the limestone slurry 60, for example, the supply quantity of the limestone, the supply rate of the limestone, the type of the limestone, the property of limestone, the concentration of the limestone, the temperature of slurry, pH, and the electric conductivity become the detection items.

In regard to the detection items of the first and second makeup water 66A and 66B, for example, the properties of the makeup water, the supply quantities of the makeup water, the supply rates of the makeup water, the temperatures, pH, and the electric conductivity become the detection items.

In regard to the detection items of the washing liquid 67, for example, the property of the rinse water, the supply quantity of the rinse water, the supply rate of the rinse water, the temperature, pH, and the electric conductivity become the detection items.

In regard to the detection items of the gypsum 30, for example, the water content rate, and the gypsum recovery amount become the detection items.

In regard to the detection items of the desulfurized wastewater 31B, for example, the wastewater amount, the wastewater speed, and the wastewater composition of the desulfurized wastewater 31B become the detection items.

Here, in regard to the detection items of the composition of the makeup water and the desulfurized wastewater 31B, for example, H⁺, Na⁺, K⁺, Ca²⁺, the total quantity of Mg, Mg²⁺, Mn²⁺, Al³⁺, NH₄⁺, Cl⁻, Br⁻, NO₃⁻, NO₂⁻, S₂O₆, SO₄²⁻, the total quantity of SO₄, SO₃²⁻, F⁻, the total quantity of F, B, SiO₂, TDS, the total quantity of N, NH₄⁺, NO₃⁻, NO₂⁻, the total quantity of Fe, Fe³⁺, Fe²⁺, oil and grease, TOC, COD, AOC, BFR, free chlorine, Ba²⁺, Sr²⁺, HCO₃⁻, CO₃²⁻, bacteria, an oxidant, an organic substance, the temperature, pH, ORP, the electric conductivity, Hg, As, Se, Cu, I⁻, and the ionic strength become the detection items.

In addition, in regard to the detection items of limestone, for example, the content of CaCO₃, the content of CaO, the utilization rate of Ca, the content of MgCO₃, the elution amount of Mg, the dissolved amount of Mg, the content of MnO, the total quantity of COD, carbon, hydrogen, oxygen, nitrogen, sulfur, phosphorus, chlorine, fluorine, selenium, boron, mercury, silicon, and titanium become the detection items.

Here, the utilization rate of Ca denotes a rate of limestone (the main component: calcium carbonate) used for desulfurization. The elution amount of Mg and the dissolved amount of Mg denote the amounts of magnesium dissolved in the absorbent slurry 28 from limestone. All the values thereof are numerical values inherent to limestone. Although the values fluctuate depending on the quarries, for example, the values are obtained from the database.

The first operation data acquiring unit 41 acquires the detection items thereof as the power generation operation information 40 of the desulfurization apparatus 27. The water quality estimating unit 42 utilizes the power generation operation information 40 as information for estimating the estimated water quality 43 of the wastewater 31 flowing into the water treatment facility 50. The control unit 44 performs the feedforward control 45 over the operational condition for the water treatment facility 50 based on the estimated water quality 43 which has been estimated.

In addition, it is possible to add the water balance around the desulfurization apparatus 27, as the detection item.

As illustrated in Fig. 8, there is a need to obtain the water balance between inflow moisture and outflow moisture for the absorption tower 27a of the desulfurization apparatus 27. As the components flowing into the absorption tower 27a, there are moisture in the flue gas G₅ and air, moisture of the first makeup water 66A and the second makeup water 66B, and moisture in the limestone slurry 60. In addition, as the flowing out components, there are moisture in the flue gas G₆, and moisture in the gypsum 30 and the desulfurized wastewater 31B. Here, as an example, the moisture of the inflow flue gas G₅ varies depending on the fuel, the combustion conditions. In regard to air 68, the concentration of moisture equal to or lower than the saturated steam pressure of the atmosphere at the charge air temperature is obtained. The concentration of moisture in the limestone is approximately 0% by mass, and the concentration of moisture at the time of preparing the limestone slurry 60 is obtained. The concentration of moisture in the discharged flue gas G₆ is 12.2 Vol% at the temperature of the flue gas, for example, 50°C at the saturated steam pressure. The concentration of moisture in the gypsum 30 is approximately 20% by mass due to separation performed by the gypsum separator 29. The concentration of moisture in the desulfurized wastewater 31B is equal to or lower than 92% by mass.

In addition, there is a change in moisture caused by crystal water at the time of preparing gypsum due to the following desulfurization reaction inside the absorption tower 27a.

SO₂ + CaCO₃ + 1/2O₂ + 2H₂O → CaSO₄·2H₂O + CO₂↑

Thus, as the change in volume (V) of moisture stored in the bottom portion of the absorption tower 27a of the desulfurization apparatus 27, it is possible to calculate the water balance from the water amount (m³/h) of the inflow component, the water amount (m³/h) of the outflow component, the change in moisture (m³/h) due to the desulfurization reaction, and the water amount (m³) inside the desulfurization apparatus 27. Based on the result of the water balance thereof, the chronological change in the concentration of water inside the desulfurization apparatus 27 is calculated.

Then, when the information of the water balance is adopted as the detection item, it is possible to determine whether or not the water balance is appropriate, and it is possible to inspect the water balance at the present time. Thus, the first operation data acquiring unit 41 acquires the information of the water balance as the power generation operation information 40 and obtains the estimated water quality 43 from the added water balance. Then, the feedforward control is performed. In this manner, it is possible to execute FF control with high accuracy. Moreover, when the water balance after the feedforward control is obtained, it is possible to further perform the feedback control.

Next, the detection items of the water treatment facility illustrated in Fig. 9 will be described.

In regard to the detection items of the oxidation treatment unit 51 configuring the water treatment facility 50, pH, ORP, DO, the temperature, the supply quantity of air, the supply rate of air, the addition amount of the oxidant, the adding speed of the oxidant, the total quantity of liquid (tank capacity), the flow rate, the reaction time, and the like become the detection items. In addition, the concentration of each of Fe²⁺, Fe³⁺, Mn²⁺, MnO₂ in the treated water after oxidation treatment becomes the detection item.

In regard to the detection items of the silica treatment unit 52, pH, the temperature, the supply quantity of the chemical agent, the agitation speed, the reaction time, and the like become the detection items. In addition, the silica concentration of the treated water after silica treatment, and the like become the detection items.

In regard to the detection items of the flocculent sedimentation unit 53, the addition amount of the flocculant, the addition amount of a coagulant, the retention time, the agitation strength, and the like become the detection items.

In regard to the detection items of the filtration unit 54, the supply quantity of liquid, the filtration speed, the washing frequency, the washing time, the addition amount of the washing agent, the temperature, suspended solids (SS), the turbidity, and the like become the detection items.

In regard to the detection items of the scale inhibitor adding unit 55, the addition amount of the scale inhibitor 55a becomes the detection item.

In regard to the detection items of the desalination apparatus 58, for example, in a case where a reverse osmosis membrane (RO) device is employed, the supply pressure, the supply flow rate, the temperature, pH, the desalination speed, the washing frequency, the washing time, the addition amount of the washing agent, the detection data from a detection sensor detecting adhering components which adhere to a membrane of the reverse osmosis membrane (ROM), the detection data from an electro-conductivity meter, and the like become the detection items. In addition, the concentration of the regenerated water 56 after desalination treatment, and the concentration of the concentrated water 57 become the detection items. In addition, in a case where desalination is performed by employing the ion exchange resin, the exchange frequency of the resin, the regeneration frequency of the resin, and the concentration of the treated water become the detection items. Moreover, in a case where an electrodialyzer (ED) is employed, the current density and the like become the detection items.

In regard to the detection items of the evaporator, the supply quantity of steam, the supply rate of steam, the supply quantity of liquid, the supply speed of liquid, the temperature of supply liquid, pH of supply liquid, the addition amount of the scale inhibitor, the temperature, the concentrated water extraction speed, and the like become the detection items.

In addition, In regard to the detection items of the water treatment facility 50 in a case where a biological treatment facility is employed, for example, the temperature, pH, the oxidation reduction potential (ORP), the dissolved oxygen (DO), the supply quantity of the chemical agent, the supply rate of the chemical agent, the supply quantity of nutrient salt, the supply rate of nutrient salt, the supply quantity, the supply rate of trace metals, the sludge retention time (SRT), the supply quantity of air, the supply rate of air, the supply quantity of the oxidant, the supply rate of the oxidant, the supply quantity of the reductant, and the supply rate of the reductant become the detection items. Examples of the chemical agent for biological treatment can include methanol and lactate.

The second operation data acquiring unit 71 acquires the detection items thereof as the water treatment operation information 70 of the water treatment facility 50. The water quality estimating unit 42 utilizes the water treatment operation information 70 as information for estimating the estimated water quality 43 of the wastewater 31 flowing into the water treatment facility 50. The control unit 44 performs the feedforward control 45 over the operational condition for the water treatment facility 50 based on the estimated water quality 43 which has been estimated.

In addition, the water treatment operation information 70 after the feedforward control 45 is sent to the control unit 44, and the control unit 44 determines whether or not the FF control over the water treatment facility 50 performed based on the estimated water quality 43 is appropriate, thereby performing the feedback (FB) control 46 over the result of the determination.

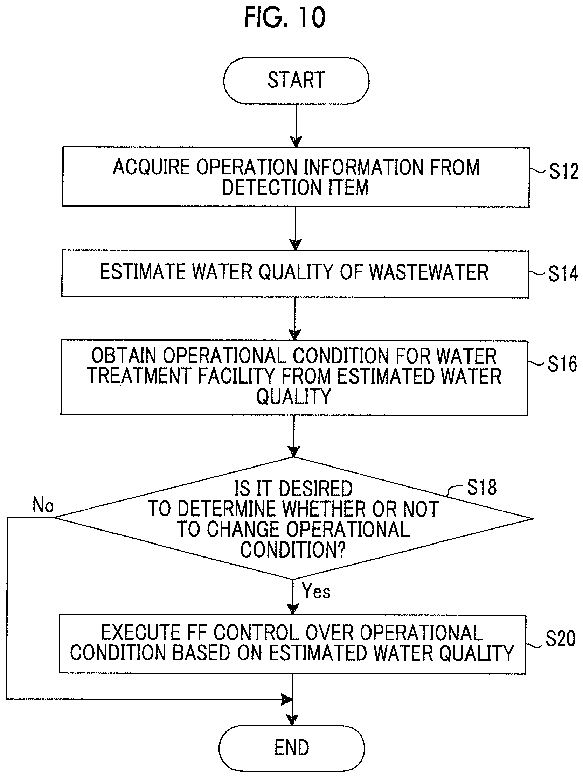

Hereinafter, treatment of the water quality estimating unit 42 of a water treatment system 10 will be described using Fig. 10. Here, Fig. 10 is a flow chart illustrating an example of a control operation of the water treatment system.

Treatment of the water quality estimating unit 42 is performed by repetitively executing the treatment illustrated in Fig. 10 while the power generation facility 20 is being driven. For example, the treatment illustrated in Fig. 10 is executed at constant intervals, or the treatment illustrated in Fig. 10 is executed every time the operation information is acquired. In addition, the treatment may be executed in a case where the fuel 21 is changed or in a case where the operation load on the boiler is changed.

In Step S12, the first operation data acquiring unit 41 acquires the operation information of the power generation facility 20. That is, the first operation data acquiring unit 41 acquires the first detecting unit data which is a result detected by the first detecting unit 13A, and data of the database via communication.

From the power generation operation information 40 acquired in Step S12, the water quality estimating unit 42 acquires the operation information corresponding to the changed item for operating the water treatment facility 50, from the first operation data acquiring unit 41. In Step S14, the water quality estimating unit 42 estimates the property of the wastewater 31 as the estimated water quality 43. In addition, in Step S16, the operational condition corresponding to the item for operating the equipment in the water treatment facility 50 is obtained from the estimated water quality 43. When the operational condition for the water treatment facility 50 is obtained, in Step S18, it is determined whether or not to change from the current operational condition to new operational condition for the water treatment facility 50 obtained by the water quality estimating unit 42. In a case where the water quality estimating unit 42 determines to change the operational condition in Step S18 (Yes), in Step S20, the control unit 44 executes the feedforward control 45 over the operational condition for the water treatment facility 50 based on the estimated water quality 43, thereby ending the present treatment.

Here, the operational condition is at least one operational condition for the equipment configuring the water treatment facility 50. In addition, as a method of notification, various methods can be employed. The operational condition may be informed through communication such as mail or may be output to the control unit 44 so as to be displayed by a display device of the water treatment facility 50. It is preferable that the water quality estimating unit 42 detects the operational condition by adding the current operational condition and a detection value with respect to the configuring equipment. In a case where the water quality estimating unit 42 determines not to change the operational condition in Step S18 (No), the water quality estimating unit 42 ends the present treatment.

In addition, the water quality estimating unit 42 can promptly detect the estimated water quality 43 of the wastewater 31 by executing the treatment illustrated in Fig. 10 every time the operation information is acquired. In addition, when the estimated water quality 43 detects that the property of the wastewater 31 has changed, the water quality estimating unit 42 or the control unit 44 detects the operational condition for the water treatment facility 50 corresponding to a prospective fluctuation in water quality and maintaining the performance of water treatment. When the notification of the fixed operational condition is issued and the feedforward control 45 is performed, the water treatment facility 50 can be stably operated.

In addition, the water treatment operation information 70 of the water treatment facility 50 may be acquired in Step S12. That is, the second operation data acquiring unit 71 acquires second detecting unit data which is a result detected by the second detecting unit 13B, and data of the database via communication.

Then, the water quality estimating unit 42 acquires the power generation operation information 40 acquired in Step S12 and the water treatment operation information 70. In Step S14, the water quality estimating unit 42 estimates the property of the wastewater 31 as the estimated water quality 43. Accordingly, it is possible to obtain the estimated water quality 43 with high accuracy based on the operation information in which the operation information of the power generation facility 20 and the operation information of the water treatment facility 50 are combined.

In addition, water quality data from the third detecting unit 13C may be acquired in Step S12. That is, the third operation data acquiring unit 47 acquires third detecting unit data which is a result detected by the third detecting unit 13C, via communication.

Then, the water quality estimating unit 42 acquires the power generation operation information 40 acquired in Step S12 and the water quality information 48A and 48B. In Step S14, the water quality estimating unit 42 estimates the property of the wastewater 31 as the estimated water quality 43. Accordingly, it is possible to obtain the estimated water quality 43 with high accuracy based on the operation information in which the operation information of the power generation facility 20 and the information of the wastewater 31 introduced to the water treatment facility 50 are combined.

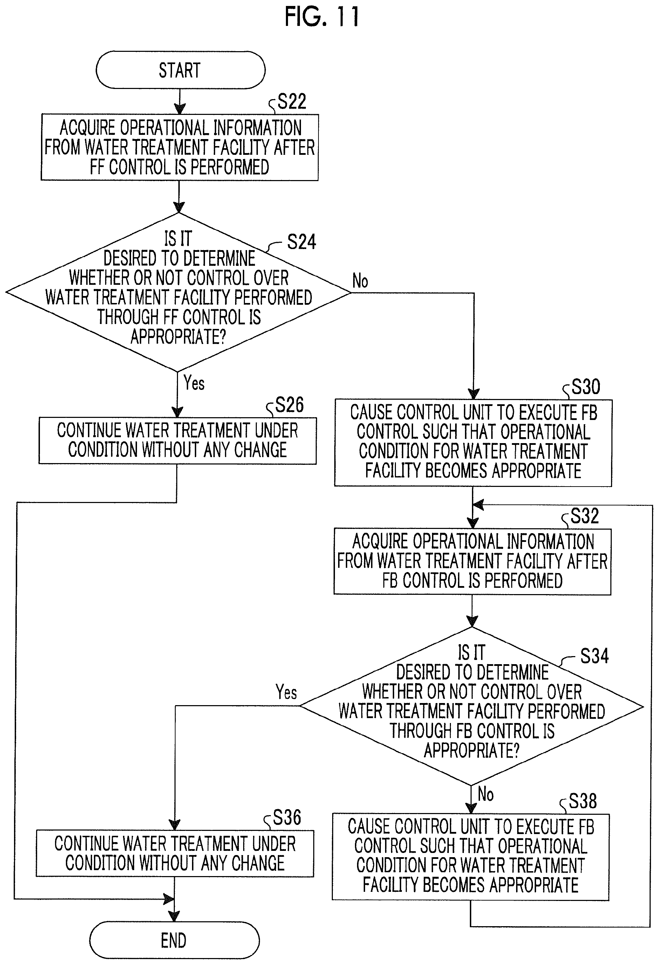

Next, the procedure of treatment in which the feedback control is added to the feedforward control will be described. Here, Fig. 11 is a flow chart illustrating another example of the control operation of the water treatment system.

The present treatment confirms whether the water treatment facility is appropriately operated after the feedforward control is executed.

In Step S22, the second operation data acquiring unit 71 acquires the operation information of the water treatment facility 50 after the FF control. That is, the second operation data acquiring unit 71 acquires the second detecting unit data which is a result detected by the second detecting unit 13B, and the data of the database via communication.

From the water treatment operation information 70 acquired in Step S22, the control unit 44 acquires the operation information corresponding to the changed item for operating the water treatment facility 50, from the second operation data acquiring unit 71. In Step S24, the control unit 44 determines whether or not the treatment for the wastewater 31 is appropriate. According to the determination in Step S24, in a case where it is determined that the operational condition for the equipment in the water treatment facility 50 is appropriate (Yes), in Step S26, water treatment continues under the condition without any change, thereby ending the present treatment.

In contrast, according to the determination in Step S24, in a case where it is determined that the operational condition for the equipment in the water treatment facility 50 is not appropriate (No), in Step S30, the control unit 44 executes the FB control such that the operational condition for the water treatment facility 50 becomes appropriate.

Thereafter, in order to determine whether the FB control is appropriate, in Step S32, the operation information of the water treatment facility 50 after the FB control is acquired.

From the water treatment operation information 70 acquired in Step S32, the control unit 44 acquires the operation information corresponding to the changed item for operating the water treatment facility 50, from the second operation data acquiring unit 71. In Step S34, the control unit 44 determines whether or not the treatment for the wastewater 31 performed through the FB control is appropriate. According to the determination in Step S34, in a case where it is determined that the operational condition for the equipment in the water treatment facility 50 is appropriate (Yes), in Step S36, water treatment continues under the condition without any change, thereby ending the present treatment.

In contrast, according to the determination in Step S34, in a case where it is determined that the operational condition for the equipment in the water treatment facility 50 is not appropriate (No), in Step S38, the control unit 44 executes the FB control again such that the operational condition for the water treatment facility 50 becomes appropriate.

The determination may be repetitively performed until the operational condition becomes appropriate.

Next, with reference to Fig. 9, an example of operational control over the equipment configuring the water treatment facility 50 which treats the wastewater 31 will be described.

In regard to the operation of the water treatment facility 50, for example, in a case of focusing on an operation of the oxidation treatment unit 51, based on the power generation operation information from the power generation facility 20 and information of heavy metal in the wastewater discharged from the power generation facility 20, the water quality estimating unit 42 estimates the composition of heavy metal in the wastewater 31 as the estimated water quality 43. Then, with respect to the oxidation treatment unit 51 configuring the water treatment facility 50, the control unit 44 performs the feedforward control over the supply quantity of the oxidant 51a regulating the performance of oxidizing heavy metal, from the estimated water quality 43 of the wastewater 31, thereby appropriately executing oxidation treatment. Accordingly, it is possible to prevent heavy metal from being insufficiently oxidized and to prevent the oxidant from being excessively supplied. The details will be described in the Examples below.

In addition, in regard to the operation of the water treatment facility 50, for example, in a case of focusing on an operation of the silica treatment unit 52, based on the power generation operation information 40 from the power generation facility 20 and information of silicon contained in the discharged wastewater, the water quality estimating unit 42 estimates the water quality of the silica composition in the wastewater 31 as the estimated water quality 43. Then, with respect to the silica treatment unit 52 configuring the water treatment facility 50, the control unit 44 can perform the feedforward control over the addition amount of the silica treatment chemical agent 52a, for example, from the water quality estimation of the wastewater 31. Accordingly, the concentration of remaining silica can be maintained equal to or lower than a target value, so that the desalination apparatus 58 can smoothly perform the treatment. The details will be described in the Examples below.

In addition, in regard to the operation of the water treatment facility 50, for example, in a case of focusing on an operation of the scale inhibitor adding unit 55, based on the power generation operation information 40 from the power generation facility 20 and information of the scale component contained in the discharged wastewater, the water quality estimating unit 42 estimates the water quality of the scale component in the wastewater 31 as the estimated water quality 43. Then, with respect to the scale inhibitor adding unit 55 configuring the water treatment facility 50, the control unit 44 performs the feedforward control over the addition amount of the scale inhibitor 55a, for example, from the estimated water quality 43 of the wastewater 31. Accordingly, it is possible to perform an operation at an optimal recovery rate, without having clogging in treatment of the desalination apparatus 58 while following the fluctuation in concentration. The details will be described in the Examples below.

In addition, in regard to the operation of the water treatment facility 50, for example, in a case of focusing on an operation of the desalination apparatus 58, based on the power generation operation information 40 from the power generation facility 20 and information of the scale component contained in the discharged wastewater, the water quality estimating unit 42 estimates the water quality in the wastewater 31. Then, the recovery rate (concentration magnification) of the desalination apparatus 58 is calculated from the estimated water quality 43. Then, the control unit 44 can perform the feedforward control 45 over the operational condition (the supply pressure or the supply flow rate) for the desalination apparatus 58 configuring the water treatment facility 50. Accordingly, it is possible to perform an operation at an optimal recovery rate, without having clogging in desalination treatment while following the fluctuation in concentration. The details will be described in the Examples below.

According to the present Example, based on the power generation operation information 40 from the power generation facility 20 which is a plant facility, the water quality estimating unit 42 estimates the water quality in the desulfurized wastewater 31B as the estimated water quality 43, and the control unit 44 performs the feedforward control over the operational condition for the water treatment facility 50 from the estimated water quality 43. Thus, it is possible to cope with a rapid fluctuation in water quality of the desulfurized wastewater 31B.

### Example 2

A water treatment system according to Example 2 of the present invention will be described with reference to the drawings.

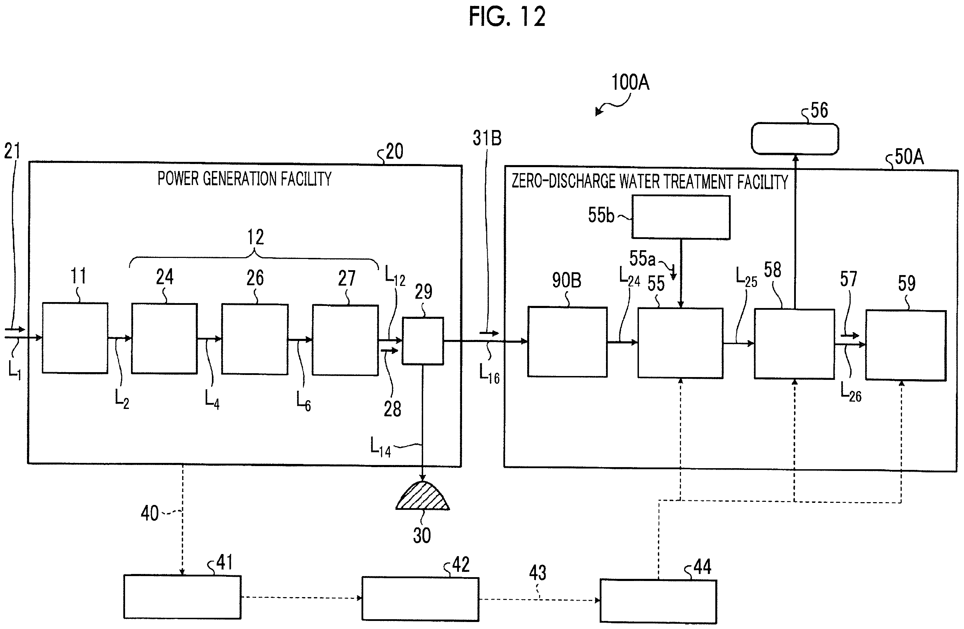

Fig. 12 is a schematic view illustrating a water treatment system according to Example 2. The same reference signs will be applied to the overlapping members in the configuration of the water treatment system according to Example 1, and the description thereof will not be repeated.

As illustrated in Fig. 12, a water treatment system 100A according to Example 2 is provided with the power generation facility 20 including the boiler 11, the air heater 24, the dust removing apparatus 26, and the desulfurization apparatus 27.

In addition, a zero-discharge water treatment facility (hereinafter, will be referred to as "water treatment facility") 50A in which the desulfurized wastewater 31B from the desulfurization apparatus 27 is subjected to zero-discharge water treatment includes a pretreatment unit 90B which performs pretreatment for the desulfurized wastewater 31B, the desalination apparatus 58 which performs desalination treatment for the desulfurized wastewater 31B after the pretreatment, and an evaporator 59 which performs evaporation drying of the concentrated water 57 from the desalination apparatus 58. The water treatment facility 50A carries out the zero-discharge treatment for the desulfurized wastewater 31B. In the present Example, as the pretreatment unit 90B, a solid-liquid separating unit removing the suspended solids in the desulfurized wastewater 31B is employed.

In the present Example, in a case where coal is employed as the fuel 21 to be supplied to the boiler 11 and in a case where the type of the coal (coal type) thereof varies, the water quality of the desulfurized wastewater 31B is estimated as the estimated water quality 43.

In a case where the coal type varies, the contents of the sulfur (S) component and the chlorine (Cl) component contained in the coal fluctuate. Therefore, the first operation data acquiring unit 41 acquires the information of the coal type as the power generation operation information 40, and the water quality estimating unit 42 calculates the saturation index (SI) of the gypsum 30 in the desulfurized wastewater 31B flowing into the desalination apparatus 58 and the total dissolved solids (TDS), from the information, thereby obtaining the estimated water quality 43. The recovery rate (concentration magnification), for example, in a case where the reverse osmosis membrane device (RO device) is employed as the desalination apparatus 58, is calculated from the obtained estimated water quality 43.

Then, the control unit 44 performs the feedforward control over the opening degree of a regulating valve which regulates the pressure of the influent water flowing into the desalination apparatus 58, and the rotation speed of a supply pump such that the calculated recovery rate is achieved.

Here, the saturation index (SI) of the gypsum 30 is an index indicating the saturation state of the gypsum. The SI is an index indicating the multiple of the concentration product of [SO₂²⁻]·[Ca²⁺] with respect to the solubility product (Ksp), in which sulfate ion and calcium ion in the wastewater can stably exist.

In addition, TDS of the wastewater is a value of a remaining substance after the desulfurized wastewater 31B has evaporated and been dried. The value is obtained by performing analysis treatment through a procedure of filtration, weighing, evaporation drying, weighing, and the like. It is also possible to employ a TDS measuring instrument which measures the conductivity, so that the value is indirectly obtained from the correlationship with respect to the conductivity.

In a first embodiment of the present Example, first, based on at least one piece of the power generation operation information 40 of the database of the fuel of the power generation facility 20 and the operation data of the power generation facility 20, the water quality estimating unit 42 estimates the ionic properties of Ca²⁺ and SO₄²⁻ in the influent water flowing into the desalination apparatus 58, and the saturation index (SI) of the gypsum in the influent water is calculated as the estimated water quality 43, from the estimated ionic properties of Ca²⁺ and SO₄²⁻ in the influent water. The water quality estimating unit 42 calculates a first water recovery rate (concentration magnification) of the desalination apparatus 58 from the calculated saturation index (SI) of the gypsum. Then, the control unit 44 performs the feedforward control over at least one of the supply pressure and the supply flow rate of the influent water supplied to the desalination apparatus 58 such that the calculated first water recovery rate is achieved.

Here, the ionic property is an index obtained from the detection items such as the concentration of calcium ion and sulfate ion in the desulfurized wastewater 31B, pH of the desulfurized wastewater, the temperature, the electric conductivity, and the ionic strength. Accordingly, it is possible to perform an operation at an optimal recovery rate, without having clogging in the RO membrane, for example, in the desalination apparatus 58, while following the fluctuation in concentration.

In addition, in a second embodiment, the water quality estimating unit 42 calculates the concentration of the total dissolved solids (TDS) in the influent water as the estimated water quality 43, from the obtained ionic concentration of the influent water. The water quality estimating unit 42 calculates a second water recovery rate of the desalination apparatus 58 from the estimated concentration of the total dissolved solids (TDS). Then, the control unit 44 performs the feedforward control over at least one of the supply pressure and the supply flow rate of the influent water supplied to the desalination apparatus 58 such that the calculated second water recovery rate is achieved.

Accordingly, it is possible to perform an operation at an optimal recovery rate, without having clogging in the RO membrane, for example, in the desalination apparatus 58, while following the fluctuation in concentration.

Moreover, in a third embodiment, the water quality estimating unit 42 compares a value of the calculated first water recovery rate (for example, the recovery rate by SI is set to four times) with a value of the calculated second water recovery rate (for example, the recovery rate by TDS is set to three times) and selects a water recovery rate having a lower value (three times). Then, the control unit 44 performs the feedforward control over at least one of the supply pressure and the supply flow rate of the influent water supplied to the desalination apparatus 58 such that the selected water recovery rate (three times) is achieved. Accordingly, it is possible to perform more stable desalination treatment in a state of having absolutely no clogging in the RO membrane and the like in the desalination apparatus 58.

In a case of control in the related art in which the feedforward control is not carried out, when TDS in the desulfurized wastewater 31B flowing into the water treatment facility 50A increases, the pump power for maintaining a predetermined recovery rate increases. In addition, when TDS is reduced, the pump power decreases.

In addition, in a fourth embodiment, the information of SI in the desulfurized wastewater 31B is calculated as the estimated water quality 43, from the operational condition for power generation in the power generation facility 20. Then, the recovery rate (concentration magnification) and the scale inhibitor added concentration in a case where the reverse osmosis membrane device is employed in the desalination apparatus 58 are calculated from the estimated water quality 43. Then, the feedforward control is performed over the opening degree of the regulating valve which regulates the pressure of the influent water flowing into the desalination apparatus 58, and the rotation speed of the supply pump such that the calculated recovery rate is achieved. In addition, the addition amount of the scale inhibitor 55a corresponding to scale in the desulfurized wastewater 31B is controlled.

Accordingly, it is possible to perform an operation at an optimal recovery rate, without having clogging in a membrane of the reverse osmosis membrane (ROM), while following the fluctuation in concentration.

Here, when the concentration amount of the concentrated water 57 in the desalination apparatus 58 is obtained, the evaporation condition for the evaporator 59 is obtained. Therefore, the control unit 44 can appropriately control supply energy (water vapor, heat quantity of a heater, and the like) to be supplied.

The control over the water recovery rate is significantly affected by the fluctuation in coal type of coal. Therefore, it is desired to add the detection item of the limestone slurry 60 supplied to the desulfurization apparatus 27, and the detection item of the desulfurization apparatus 27.

As the item of an estimation expression obtaining the estimated water quality 43, in addition to the contents of S and Cl in coal, it is desired to add the concentration of Ca, the flow rate, and the like of the limestone slurry 60 and the absorbent slurry 28.

In addition, for example, in a case where the pond 32 illustrated in Fig. 4 is provided, it is desired to add water balance calculation sheets for the desulfurization apparatus 27 and the pond 32.

In regard to estimating the water quality of the pond 32, the concentration varies due to dilution caused by rainwater raining in the pond 32, and concentration caused by evaporation, in addition to the inflow quantity and the water quality of the desulfurized wastewater 31B flowing into the pond 32. Thus, in addition to the water quality of the desulfurized wastewater 31B which is the influent water, the pond storage amount, the rainfall amount, the evaporation amount, the temperature affecting the evaporation speed, and the humidity are set as the detection items.

Accordingly, it is possible to estimate a fluctuation in water quality for a long period in which the desulfurized wastewater 31B is stored in the pond 32.

Moreover, among the above-described detection items of the desulfurization apparatus 27, it is desired to add the ionic concentration of all types of the absorbent slurry 28 extracted from the absorption tower 27a (extracted liquid of the absorption tower), and the ionic concentration of Ca and SO₄.

Here, an inflow source of sulfate ion in the desulfurized wastewater 31B for obtaining the estimated water quality 43 will be described. The inflow source of sulfate ion is sulfide in coal which is the fuel 21. After coal combusts in the boiler, most of the sulfide becomes SO₂ gas. This SO₂ gas is absorbed into the absorbent slurry 28 through a gas-liquid contact portion of the desulfurization apparatus 27 and becomes sulfite ion (SO₃²⁻), thereby generating calcium ion and calcium sulfite (CaSO₃). Thereafter, calcium sulfate (CaSO₄) is generated due to oxidation in the oxidation water tank at the bottom portion of the absorption tower 27a.

Moreover, an inflow source of calcium ion in the desulfurization apparatus 27 is limestone. Calcium ion (Ca²⁺) is supplied as the limestone slurry 60 which is calcium carbonate (CaCO₃) slurry and reacts with SO₄²⁻ 1:1, thereby generating gypsum (CaSO₄).

The remaining Ca²⁺ or SO₄²⁻ remains in the absorbent slurry 28.

Generally, in the desulfurization apparatus 27, the limestone slurry is added equal to or more than the equivalent, thereby resulting in the liquid property having a large amount of Ca²⁺ and a small amount of SO₄²⁻. This concentration is fixed by the solubility product (Ksp) and is calculated with each of the activities such that Ksp = {SO₄²⁻}·{Ca²⁺} becomes uniform at "predetermined temperature". The factor {SO₄²⁻} indicates the activity and is obtained by multiply the concentration [SO₄²⁻] by the activity coefficient. The activity coefficient depends on the ionic strength.

Thus, as the power generation operation information 40, the water quality estimating unit 42 can obtain the estimated water quality 43 with higher accuracy based on the measurement result from the first detecting unit 13A obtained based on the operation information of the equipment in the power generation facility 20, and based on the power generation information in which the action of sulfate ion is added, in addition to the information of the coal type of coal and the operation load on the boiler. Particularly, in the power generation facility 20, in regard to the detection items, it is preferable to estimate the water quality by using the information of the absorbent slurry 28 and the limestone slurry 60 in which sulfate ion is extremely active.

In addition, the water quality estimation unit 42 may estimate a level of the water quality change based on a change in water quality in the separated water storage tank 29b (otherwise, in the desulfurized wastewater 31B or inside the oxidation water tank at a lower portion of the absorption tower 27a), and a time difference between the changes of the operational condition for the power generation facility 20.

Accordingly, it is possible to estimate a prospective time at which the water quality changes. The control unit 44 may set the time for changing the operational condition for the water treatment facility 50A, from the estimated time.

Specifically, rather than changing the operational condition for the power generation facility 20 having time to spare, the operational condition for the water treatment facility 50A may be changed at once, or the change may be made in consideration of the aforementioned time difference.

Moreover, in a case where the coal type of coal has changed as the operational condition, even though the water quality of the desulfurized wastewater 31B starts to change at once, it takes approximately three days to ten days, for example, until the change is completed.

As a method of evaluating the time difference, it is possible to employ a tracer substance, for example, when the coal type is changed. In addition, a matter (for example, a chlorine compound and a bromine compound) which is generated inside the power generation facility may be employed as the tracer substance, or the tracer substance may be input from outside the system (for example, a fluorescent substance and a radioisotope substance).

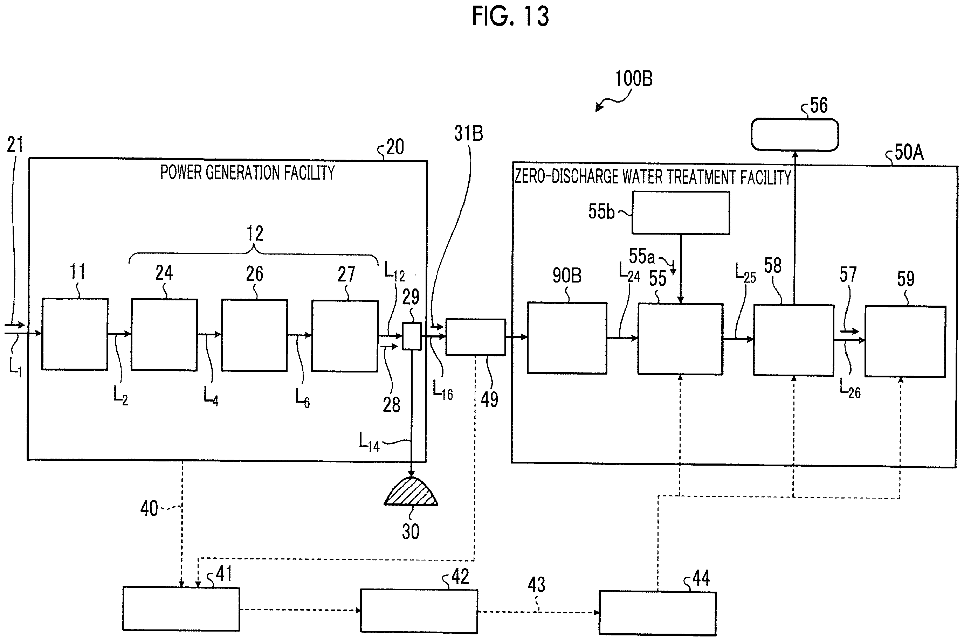

Fig. 13 is a schematic view illustrating a different water treatment system according to Example 2.

As illustrated in Fig. 13, a different water treatment system 100B according to Example 2 is provided with the regulation tank 49 as a facility which temporarily stores the desulfurized wastewater 31B, between the power generation facility 20 and the water treatment facility 50A. The water quality information from the regulation tank 49 is sent to the first operation data acquiring unit 41, and the water quality estimating unit 42 measures the water quality of the desulfurized wastewater 31B, thereby grasping the current water quality.
for example, it is preferable that the regulation tank 49 is a facility having a large capacity so as to be able to store the desulfurized wastewater 31B as much as the amount ranging from 0.1 hours to 24 hours or the like. Then, in a case where the regulation tank 49 having a large capacity is installed, even in a case where the property of the desulfurized wastewater 31B has significantly changed due to a fluctuation in property of the fuel or load on the boiler of the power generation facility 20 side, the change in the desulfurized wastewater 31B is absorbed into the large volume of the desulfurized wastewater 31B which has been already stored therein. As a result, a buffer function is conducted, in which the chronological change in water quality is relaxed.

Here, in a case where the regulation tank 49 is installed, the states of the desulfurized wastewater 31B flowing into the regulation tank 49 and the water quality of the desulfurized wastewater 31B discharged from the regulation tank 49 are sent to the first operation data acquiring unit 41 together with the power generation operation information 40, as the detection items. The water quality estimating unit 42 obtains the estimated water quality 43 based on the pieces of information, and thus, it is possible to execute the feedforward (FF) control with higher accuracy.

### Example 3

A water treatment system according to Example 3 of the present invention will be described with reference to the drawings.

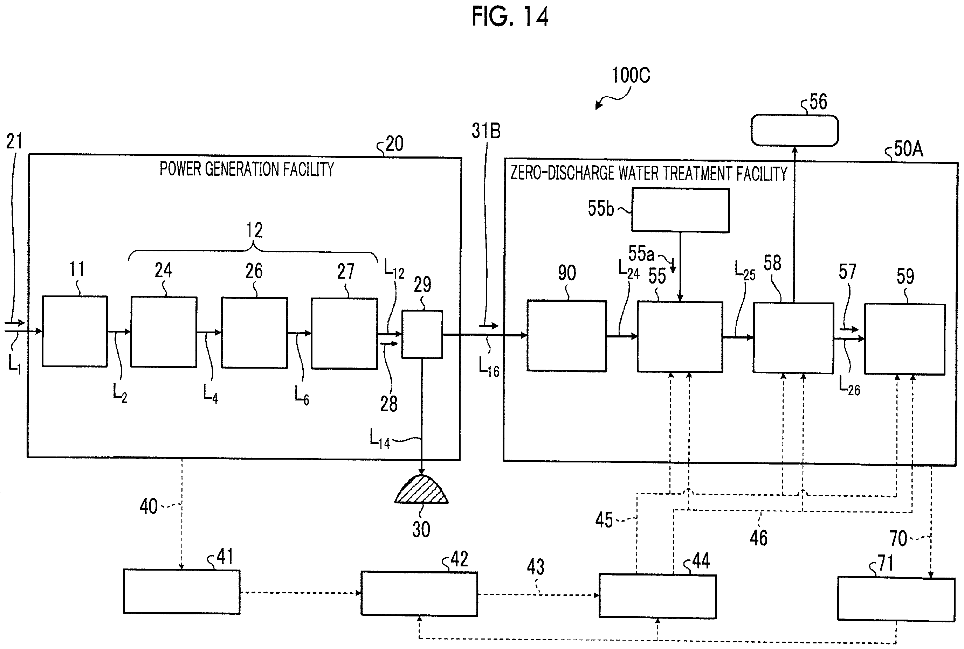

Fig. 14 is a schematic view illustrating a water treatment system according to Example 3. The same reference signs will be applied to the overlapping members in the configurations of the water treatment systems according to Examples 1 and 2, and the description thereof will not be repeated.

As illustrated in Fig. 14, compared to the water treatment system 100A of Example 2, a water treatment system 100C according to Example 3 is provided with the second operation data acquiring unit 71 which acquires the water treatment operation information 70 from the water treatment facility 50A, and the water treatment operation information 70 from the water treatment facility 50A is accumulated in the water quality estimating unit 42. The water quality estimating unit 42 estimates the water quality of the wastewater 31 as the estimated water quality 43 based on the information of both the power generation operation information 40 and the water treatment operation information 70. The control unit 44 performs the FF control 45 in which the operational condition for the water treatment facility 50A is added, based on the estimated water quality 43.

Accordingly, for example, it is possible to estimate the estimated water quality 43 in which the current operation information of the desalination apparatus 58 is added.

In addition, in the water treatment system 100B, the second detecting unit 13B detects the state of the equipment in the water treatment facility 50A after the FF control 45 based on the obtained estimated water quality 43, and the second operation data acquiring unit 71 acquires the water treatment operation information 70 in the water treatment facility 50A after the FF control 45.

The water treatment operation information 70 of the second operation data acquiring unit 71 is output to the control unit 44. Then, the control unit 44 determines whether or not the FF control (for example, the recovery rate and the addition amount of the scale inhibitor 55a) 45 over the water treatment facility 50A performed based on the estimated water quality 43 is appropriate, thereby performing the feedback (FB) control 46 over the determined result.

Accordingly, the control unit 44 can determine whether or not the operation of the water treatment facility 50A after the FF control 45 is appropriate. In a case where the operation is not appropriate, it is possible to perform an operation corrected through the FB control 46. Therefore, it is possible to more unerringly cope with a rapid fluctuation in water quality of the wastewater. The control in which the feedforward control 45 and the feedback control 46 are combined can also be carried out in the Examples described below, in a similar manner. The present Example also applies to the Examples 4 and 5 described below, in a similar manner.

### Example 4

A water treatment system according to Example 4 of the present invention will be described with reference to the drawings.

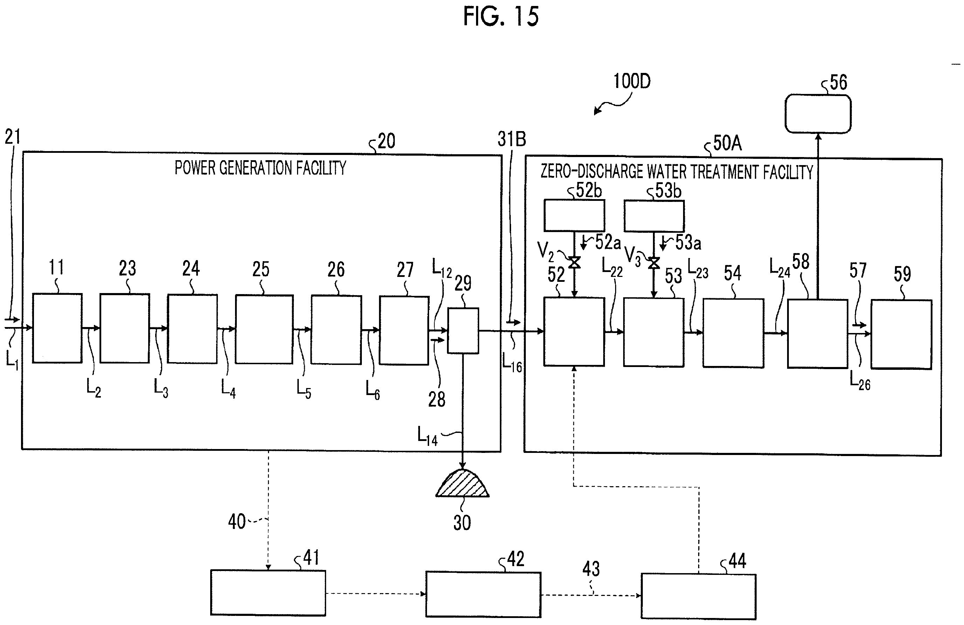

Fig. 15 is a schematic view illustrating a water treatment system according to Example 4. The same reference signs will be applied to the overlapping members in the configurations of the water treatment systems according to Examples 1 to 3, and the description thereof will not be repeated.

As illustrated in Fig. 15, a water treatment system 100D according to Example 4 is provided with the power generation facility 20 including the boiler 11, a denitration apparatus 23, the air heater 24, a heat recovery facility 25, the dust removing apparatus 26, and the desulfurization apparatus 27.

In addition, the water treatment facility 50A in which the desulfurized wastewater 31B from the desulfurization apparatus 27 is subjected to water treatment includes the silica treatment unit 52 which removes the silica composition in the desulfurized wastewater 31B, the flocculent sedimentation unit 53 in which solids in the desulfurized wastewater 31B after the silica treatment are subjected to flocculent sedimentation and are separated, the filtration unit (for example, the UF membrane, the NF membrane, and the MF membrane) 54 which causes the solids in the desulfurized wastewater 31B to be separated, the desalination apparatus 58 which performs desalination treatment for the desulfurized wastewater 31B after filtration treatment, and the evaporator 59 which performs evaporation drying of the concentrated water 57 from the desalination apparatus 58. The water treatment facility 50A carries out zero-discharge treatment. The silica treatment unit 52 of the present Example is configured to include the silica treatment agent supply unit 52b which supplies the silica treatment chemical agent 52a and causes a silica composition to be deposited, and the solid-liquid separating unit (not illustrated) which causes a deposit to be separated.

In the present Example, in a case where coal is employed as the fuel 21 to be supplied to the boiler 11 and in a case where the type of the coal (coal type) thereof varies, in regard to the water quality of the desulfurized wastewater 31B, the silica composition is estimated as the estimated water quality 43.

The detection items of the present Example include the type of the makeup water, the limestone slurry 60, pH of the absorbent slurry 28, ORP, the temperature, the supply quantity of coal, the supply quantity of limestone, the wastewater speed of the desulfurized wastewater 31B, the discharge flow rate, and the like, in addition to the type of coal.

In a case where the coal type varies, SiO₂ contained in the desulfurized wastewater 31B fluctuates, from the content of the silica (silicon (Si)) component depending on the coal type. Thus, the first operation data acquiring unit 41 acquires the information of the coal type as the power generation operation information 40, and the water quality estimating unit 42 estimates the concentration of the silica composition in the desulfurized wastewater 31B flowing into the desalination apparatus 58, from the information, thereby obtaining the estimated water quality 43. The feedforward control is performed over the supply quantities of the chemical agent (for example, a sodium aluminate solution, an iron chloride solution, a macromolecular flocculent polymer) 52a and the like supplied to the silica treatment unit 52, from the obtained estimated water quality 43. The addition amount of the silica treatment chemical agent 52a from the silica treatment agent supply unit 52b is controlled by the control unit 44 via the valve V₂.

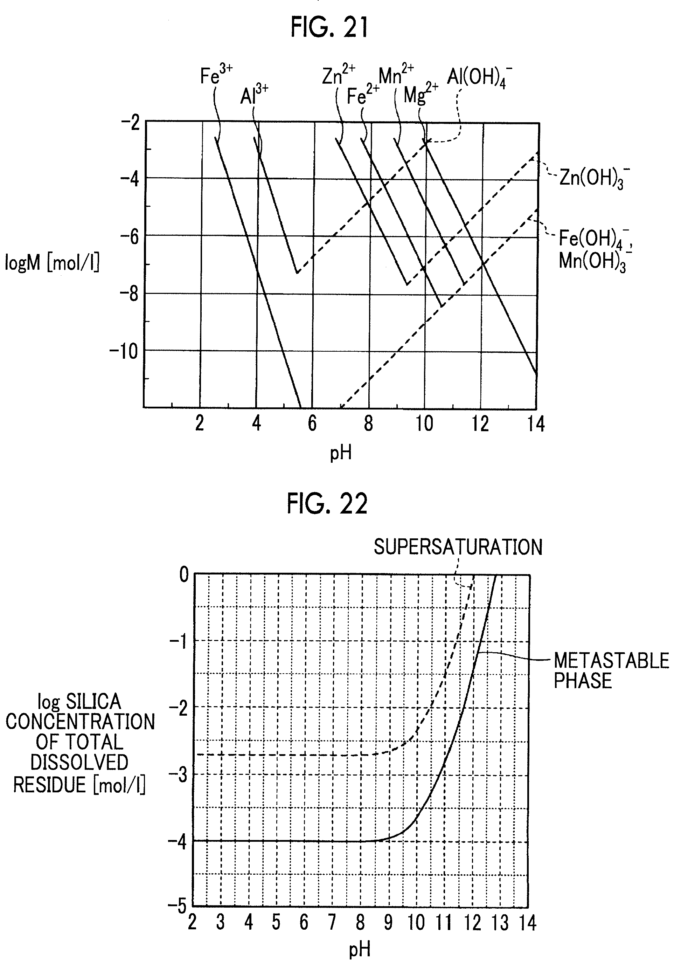

Here, in the present Example, for example, action of ion in a case where a sodium aluminate solution is employed and supplied as the silica treatment chemical agent 52a will be described. Fig. 21 is a diagram of a relationship between a pH value of desulfurized wastewater and solubility with respect to metal ions. As illustrated in Fig. 21, for example, action of aluminum ion varies having pH 5.5 as a fiducial pH level. When the pH level is pH 5.5 or lower, the solution exists as Al³⁺, and when the pH level is pH 5.5 or higher, the solution exists as [Al(OH)₄]⁻. Thus, within a range of pH 5.5 and higher, a compound of [Al(OH)₄]⁻ and silica (SiO₂) is formed and a deposit (aluminum silica (Al-SiO₂) compound) is deposited, so that silica can be removed through solid-liquid separation.

When the concentration of the silica composition in the desulfurized wastewater 31B is estimated as the estimated water quality 43, for example, it is possible to perform the feedforward control over the quantity of the silica treatment chemical agent 52a in the silica treatment unit 52 estimated to be necessary in the future due to a fluctuation in coal type. In addition, since the actual change of the property of the desulfurized wastewater 31B caused due to a fluctuation in coal type occurs with a time lag, a surplus quantity may be added based on the accumulated information of the operation mode in the past in consideration of the concentration changing time or unevenness of the changed concentration.

Accordingly, it is possible to maintain the concentration of remaining SiO₂ equal to or lower than a target value. When the target value is maintained, for example, in a case where a reverse osmosis membrane device is employed as the desalination apparatus 58 installed on the downstream side, clogging in a membrane of the reverse osmosis membrane (ROM) can be avoided.

Here, a source for silica in the desulfurized wastewater 31B will be described. Examples of the inflow source of silica include limestone and makeup water, in addition to coal. The inflow quantity of silica to the absorbent slurry 28 of the desulfurization apparatus 27 is fixed from the inflow quantities thereof.

Normally, the silica concentration in the absorbent slurry 28 of the desulfurization apparatus 27 is calculated based on the concentration magnification set from the water balance around the desulfurization apparatus 27.

In regard to the water balance, the concentration magnification inside the desulfurization apparatus 27 is fixed from the inflow quantity and the outflow quantity of moisture to the desulfurization apparatus 27, the inner storage (in the absorbent) quantity, and the like.

Thus, as the power generation operation information 40, the water quality estimating unit 42 can obtain the estimated water quality 43 with higher accuracy based on the measurement result from the first detecting unit 13A obtained based on the operation information of the equipment in the power generation facility 20, and based on the power generation information in which the action of the silica composition is added, in addition to the information of the coal type of coal and the operation load on the boiler.

In this manner, when the feedforward control of the present Example is performed, in a case where there is a change in coal type of coal or a fluctuation in operation load on the boiler, a scale component such as gypsum having a bad influence on membrane treatment of the desalination apparatus 58 contained in the desulfurized wastewater 31B is restrained from being deposited. Accordingly, in the related art, when the property of desulfurized wastewater flowing into a discharged water treatment facility is examined and an abnormality thereof is detected, the water quality has already changed and scale adhering has occurred in the membrane treatment. However, according to the present Example, the feedforward control is executed so as to remove the source of silica, and thus, the concentration of the remaining silica composition flowing into the desalination apparatus 58 can be maintained equal to or lower than a target value.

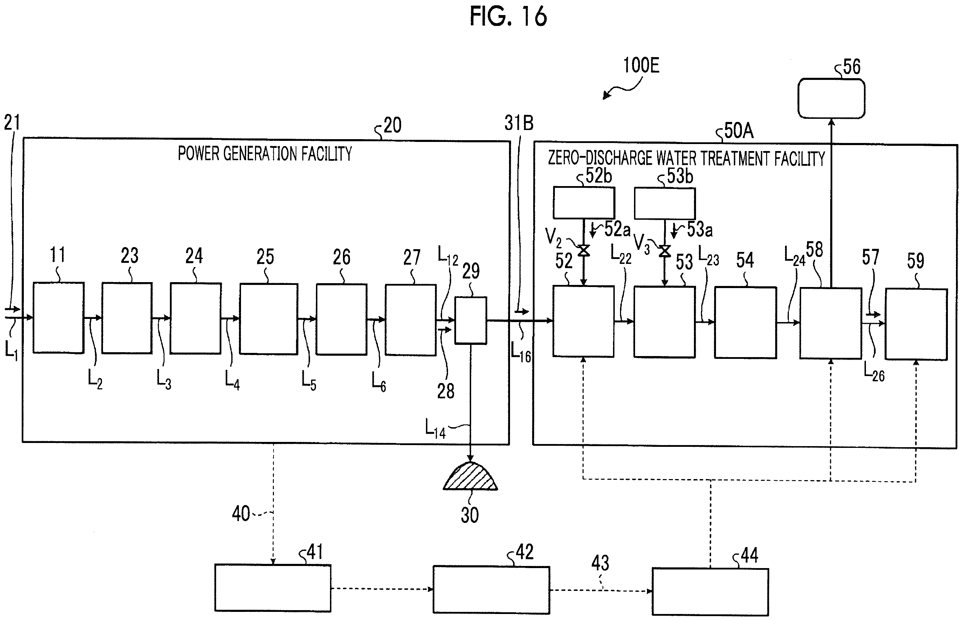

Fig. 16 is a schematic view illustrating a different water treatment system according to Example 4.

Compared to the water treatment system 100D illustrated in Fig. 15, a water treatment system 100E illustrated in Fig. 16 further executes feedforward treatment of the desalination apparatus 58 according to Example 2.

In this case, the control to be prioritized between the control over the performance of the silica treatment unit 52 removing silica, and the control over the performance of removing scale is suitably fixed in accordance with the operational circumstances. However, it is preferable that the feedforward control controlling the water recovery rate of the desalination apparatus 58 is executed first.

That is, the estimated water quality 43 of the desulfurized wastewater 31B is estimated and the recovery rate (concentration magnification) of the desalination apparatus 58 is calculated from the power generation operation information 40. Then, the control unit 44 executes the feedforward control over the operational condition (the supply pressure or the supply flow rate) for the desalination apparatus 58 configuring the water treatment facility 50A. Thereafter, the feedforward control for controlling the performance of removing silica is executed. When the water recovery rate is controlled, the control over removing scale described above may be executed together.

Accordingly, it is possible to execute the feedforward control with high accuracy by employing the control over the water recovery rate and the control over the performance of removing silica together.

### Example 5

A water treatment system according to Example 5 of the present invention will be described with reference to the drawings.

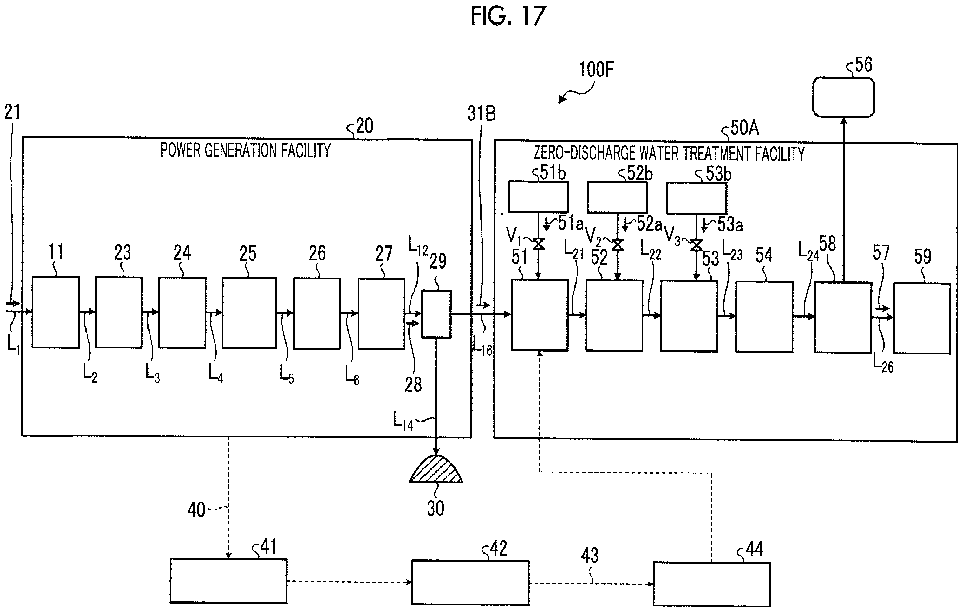

Fig. 17 is a schematic view illustrating a water treatment system according to Example 5. The same reference signs will be applied to the overlapping members in the configurations of the water treatment systems according to Examples 1 to 4, and the description thereof will not be repeated.

As illustrated in Fig. 17, a water treatment system 100F according to Example 5 is provided with the power generation facility 20 including the boiler 11, the denitration apparatus 23, the air heater 24, the heat recovery facility 25, the dust removing apparatus 26, and the desulfurization apparatus 27.

In addition, the water treatment facility 50A in which the desulfurized wastewater 31B from the desulfurization apparatus 27 is subjected to water treatment includes the oxidation treatment unit 51 which performs oxidation treatment for heavy metal in the desulfurized wastewater 31B, the silica treatment unit 52 which removes the silica composition in the desulfurized wastewater 31B after oxidation treatment, the flocculent sedimentation unit 53 which causes solids in the desulfurized wastewater 31B after silica treatment to be separated through flocculent sedimentation, the filtration unit (for example, the UF membrane, the NF membrane, and the MF membrane) 54 which causes solids in the desulfurized wastewater 31B to be separated, the desalination apparatus 58 which performs desalination treatment for the desulfurized wastewater 31B after filtration treatment, and the evaporator 59 which performs evaporation drying of the concentrated water 57 from the desalination apparatus 58. The water treatment facility 50A carries out zero-discharge treatment.

In the present Example, in a case where coal is employed as the fuel 21 to be supplied to the boiler 11 and in a case where the type of the coal (coal type) thereof varies, in regard to the water quality of the desulfurized wastewater 31B, the quantity of heavy metal is estimated as the estimated water quality 43.

Examples of the detection items of the present Example include limestone, pH of the absorbent slurry 28, ORP, the temperature, the supply quantity of coal, the supply quantity of the limestone slurry 60, the wastewater speed of the desulfurized wastewater 31B, and the discharge flow rate, in addition to the type of coal.

In a case where the coal type varies, the metal compositions contained in the desulfurized wastewater 31B fluctuate, from the difference of the content of the metal compositions such as the iron (Fe) component and the manganese (Mn) component depending on the coal type. Thus, the first operation data acquiring unit 41 acquires the information of the coal type as the power generation operation information 40, and the water quality estimating unit 42 estimates a level of the change in concentration of the heavy metal compositions in the desulfurized wastewater 31B flowing into the oxidation treatment unit 51 based on the operational condition at the present time, from the information, thereby obtaining the estimated water quality 43. The control unit 44 performs the feedforward control over the supply quantities of the oxidant (for example, air, oxygen, ozone, and hydrogen peroxide) 51a supplied to the oxidation treatment unit 51, from the obtained estimated water quality 43. The addition amount of the oxidant 51a from the oxidant supply unit 51b is controlled by the control unit 44 via the valve V₁.

When the concentration of heavy metal of the desulfurized wastewater 31B is estimated as the estimated water quality 43, for example, the control unit 44 can calculate the quantity of the oxidant 51a in the oxidation treatment unit 51 estimated to be necessary in the future due to a fluctuation in coal type and perform the feedforward control.

As a result, from the fluctuation in content of the metal compositions (for example, Fe and Mn), for example, due to a fluctuation in type of coal which is the fuel 21, the water quality estimating unit 42 estimates the concentration of Fe and Mn, for example, contained in the desulfurized wastewater 31B, as the estimated water quality 43. The control unit 44 performs the feedforward control over the supply quantity of air supplied to the oxidation treatment unit 51, from the estimated water quality 43. Accordingly, it is possible to prevent the metal compositions (Fe, Mn, and the like) from being insufficiently oxidized and to prevent the air from being excessively supplied. When the air is prevented from being excessively supplied, it is possible to achieve reduction of the pump power.

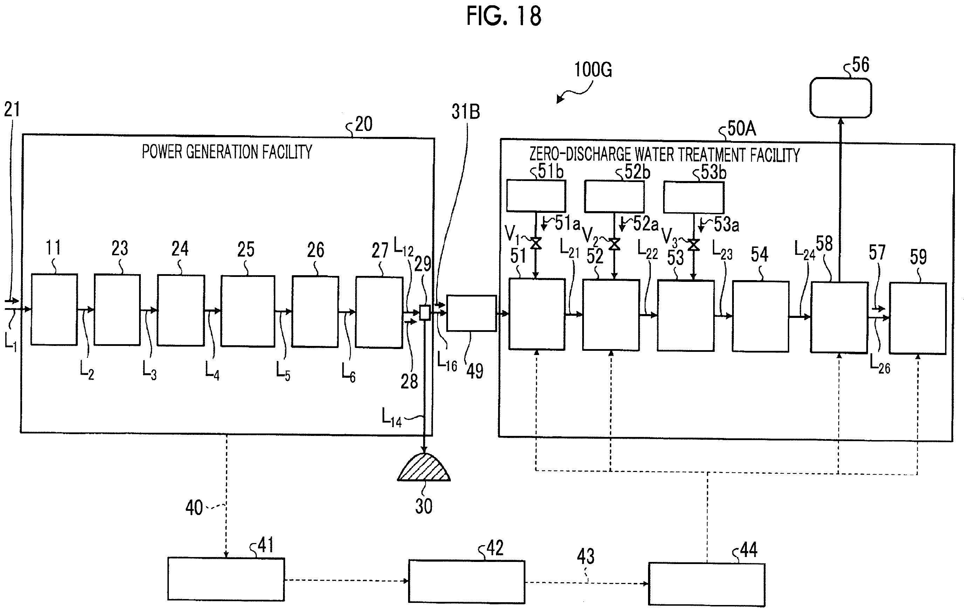

Fig. 18 is a schematic view illustrating a different water treatment system according to Example 5.

Compared to the water treatment system 100F illustrated in Fig. 17, a water treatment system 100G illustrated in Fig. 18 further executes the feedforward control over the desalination apparatus 58 according to Example 2 and the feedforward control over the silica treatment according to Example 3 together.

In this case, among the control over the performance of the oxidation treatment unit 51 oxidizing heavy metal, the control over the performance of the silica treatment unit 52 removing silica, and the control over the water recovery rate of the desalination apparatus, the control to be prioritized is suitably fixed in accordance with the operational circumstances. However, it is preferable that the feedforward control controlling the water recovery rate of the desalination apparatus 58 is executed first.

That is, the estimated water quality 43 of the desulfurized wastewater 31B is estimated and the recovery rate (concentration magnification) of the desalination apparatus 58 is calculated from the power generation operation information 40. Then, the control unit 44 executes the feedforward control over the operational condition (for example, the supply pressure or the supply flow rate) for the desalination apparatus 58 configuring the water treatment facility 50A. Next, the feedforward control for controlling the performance of removing silica is executed. Lastly, the feedforward control for controlling the performance of oxidizing heavy metal is executed. In this manner, when the water recovery rate is set, a suitable quantity of the chemical agent for removing silica and a suitable quantity of the oxidant in the metal oxidizing unit are set.

Accordingly, it is possible to execute the FF control with high accuracy by employing the control over the water recovery rate, the control over the performance of removing silica, and the control over oxidation treatment together. When the water recovery rate is controlled, the control over removing scale described above may be executed together.

Moreover, in the present Example, the regulation tank 49 serving as a facility which temporarily stores desulfurized wastewater 31B is provided between the power generation facility 20 and the water treatment facility 50A. The information from the regulation tank 49 is sent to the first operation data acquiring unit 41, and the water quality estimating unit 42 measures the water quality of the wastewater 31. The water quality of the wastewater 31 discharged from the regulation tank 49 is grasped, and thus, it is possible to estimate the water quality of the desulfurized wastewater 31B with higher accuracy.

### Example 6

A water treatment system according to Example 6 of the present invention will be described with reference to the drawings.

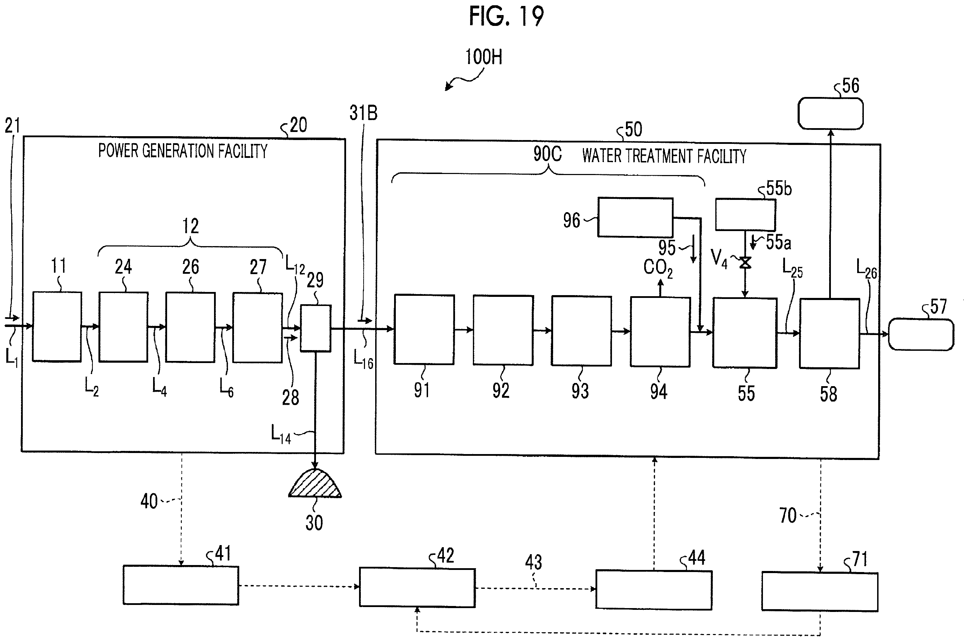

Fig. 19 is a schematic view illustrating a water treatment system according to Example 6. The same reference signs will be applied to the overlapping members in the configurations of the water treatment systems according to Examples 1 to 5, and the description thereof will not be repeated.

In the water treatment system 100B according to Example 2 illustrated in Fig. 13, the pretreatment unit 90B causes the suspended solids in the desulfurized wastewater 31B to be separated. However, the pretreatment unit is not limited thereto.

As illustrated in Fig. 19, in a water treatment system 100H according to the present Example, a pretreatment unit 90C includes a solid-liquid separating unit 91 which causes the suspended solids in the desulfurized wastewater 31B to be subjected to solid-liquid separation, a silica removing unit 92 which treats silica in the desulfurized wastewater 31B after solid-liquid separation, an ion exchange resin unit 93 which performs treatment of adsorbing ion in the desulfurized wastewater 31B after silica treatment, a degassing unit 94 which separates gas (carbon dioxide gas (CO₂)) in the desulfurized wastewater 31B after ion exchange treatment, an alkali agent supply unit 96 which supplies an alkali agent 95 to the desulfurized wastewater 31B after degassing treatment, and the desalination apparatus 58 which performs desalination treatment after the desulfurized wastewater 31B is alkalized. The pretreatment unit 90C carries out the zero-discharge treatment. The zero-discharge treatment for the concentrated water 57 from the desalination apparatus 58 is operated in a manner similar to that in the Example described above.

In the pretreatment unit 90C, turbid components in the desulfurized wastewater 31B are removed by the solid-liquid separating unit 91. Thereafter, the silica composition is adsorbed or separated by the silica removing unit 92, and the ion exchange resin unit 93 which is a cation exchange resin removes cation components such as Ca²⁺ and Mg²⁺. Thereafter, the degassing unit 94 adds acid, and carbonate ion in the desulfurized wastewater 31B is transformed to carbonate gas, thereby being degassed. The alkali agent 95 is added to the desulfurized wastewater 31B after degassing, silica in the desulfurized wastewater 31B is dissolved, and the desalination apparatus 58 performs desalination treatment.

The detection items in a case of the pretreatment unit 90C can include detection items as follows, in addition to the above-described detection items of the water treatment facility in Fig. 9.

In regard to the ion exchange resin unit 93, it is possible to include the liquid flow rate of the treated water, the regeneration frequency, the composition of regenerated liquid, and the concentration of Ca²⁺, Mg²⁺, and SiO₂ in the treated water.

In regard to the degassing unit 94, it is possible to include the supply rate of acid, pH, the concentration of a carbonate compound in the treated water, HCO₃⁻, CO₃²⁻, pH, the temperature, the concentration of off gas CO₂, and the off gas speed.

In regard to the estimated water quality 43, for example, it is possible to include pH, the concentration of calcium, the concentration of magnesium, alkalinity, the concentration of chlorine, the sulfate ionic concentration, the silica concentration, SS, turbidity, the chemical oxygen demand (COD), the langelier saturation index (LSI), the concentration of calcium sulfate, the concentration of a metal (iron, aluminum, and magnesium) compound, and alkalinity.

Here, the langelier saturation index (LSI) is obtained from the ionic properties of Ca²⁺ and HCO₃⁻ in the influent water and indicates a saturation exponential equation determined in consideration of pH, the calcium hardness, the dissolved amount of the solid matter, the temperature, and the like. Specifically, the difference (pH - pHs) of actual pH of water and calcium carbonate saturation pH (pHs) is obtained so as to indicate the saturation degree of the calcium carbonate component.

In regard to the desalination apparatus 58, it is possible to include the supply pressure, the concentration magnification, the supply flow rate, pH, the concentration of the scale inhibitor, the concentration of the regenerated water, the flow rate of the regenerated water, the concentration of the concentrated water, and the flow rate of the concentrated water.

As the items of the feedforward control, in regard to the ion exchange resin unit 93, it is possible to include the liquid flow rate of the treated water, the regeneration frequency, and the composition of regenerated liquid. In regard to the degassing unit 94, it is possible to include the supply rate of acid, and pH. In regard to the desalination apparatus 58, it is possible to include the supply pressure, the concentration magnification, the supply flow rate, pH, and the concentration of the scale inhibitor.

Hereinafter, an example of the feedforward control over the pretreatment unit 90C will be described.

In regard to the solid-liquid separating unit 91, the water quality estimating unit 42 estimates the concentration of the suspended solids in the wastewater flowing into the solid-liquid separating unit 91, based on at least one of the fuel data of the plant facility and the operation data of the plant facility. The control unit 44 controls the supply quantity of the flocculant supplied to the solid-liquid separating unit 91, in accordance with the estimated concentration of the suspended solids. When the addition amount of the flocculant is controlled, the solid-liquid separating unit 91 can perform the control over the removal of suspended matters.

In regard to the silica removing unit 92, the water quality estimating unit 42 estimates the concentration of the silica composition in the wastewater flowing into the silica removing unit 92, based on at least one of the fuel data of the plant facility and the operation data of the plant facility. The control unit 44 controls the addition amount of the silica treatment chemical agent supplied to the silica treatment unit, in accordance with the concentration of the silica composition estimated by the water quality estimating unit. When the addition amount of the silica treatment chemical agent is controlled, the silica removing unit 92 can perform the control over the removal of silica.

In addition, the silica removing unit adding the silica treatment chemical agent can remove silica by using the ion exchange resin. In this case, the regeneration frequency of the ion exchange resin is controlled. When the regeneration frequency of the ion exchange resin is controlled, the silica removing unit 92 can perform the control over the removal of silica.

In regard to the ion exchange resin unit 93, the water quality estimating unit 42 estimates the ionic properties of Ca²⁺ and HCO₃⁻, and pH in the influent water flowing into the desalination apparatus 58, based on at least one of the fuel data of the plant facility and the operation data of the plant facility. The regeneration frequency of the ion exchange resin for causing the influent water to circulate is calculated from the estimated ionic properties of Ca²⁺ and HCO₃⁻, and pH in the influent water. The control unit 44 performs the control such that the calculated regeneration frequency of the ion exchange resin is achieved.

In addition, the regeneration frequency of the ion exchange resin may be controlled by estimating the ionic property of Mg²⁺ in the influent water and calculating the regeneration frequency of the ion exchange resin causing the influent water to circulate, from the estimated ionic property of Mg²⁺. When the regeneration frequency of the ion exchange resin is controlled, the ion exchange resin unit 93 can perform the control over the removal of Ca²⁺ and Mg²⁺.

In regard to the degassing unit 94, the water quality estimating unit 42 estimates the ionic property of HCO₃⁻ and pH in the influent water flowing into the desalination apparatus 58, based on at least one of the fuel data of the plant facility and the operation data of the plant facility. The operational pH of the degassing unit 94 causing the influent water to circulate is calculated from the estimated concentration of HCO₃²⁻. The control unit 44 controls pH of the degassing unit 94 such that the operational pH of the degassing unit 94 meets the calculated pH. When this pH is controlled, the degassing unit 94 can perform the control over the removal of CO₂.

In regard to the alkali agent supply unit 96, the water quality estimating unit 42 estimates pH in the influent water flowing into the desalination apparatus 58, based on at least one of the fuel data of the plant facility and the operation data of the plant facility. The control unit 44 controls pH of the alkali agent supply unit 96 such that the operational pH of the alkali agent supply unit 96 is achieved. When this pH is controlled, the alkali agent supply unit 96 can perform the control over the prevention of deposition of silica.

Here, the action of pH in the desulfurized wastewater 31B and solubility of metal hydroxide, and the action of pH and the silica concentration will be described. Fig. 22 is a diagram of a relationship between the pH value of the desulfurized wastewater and silica concentration (supersaturation and a metastable phase).

As illustrated in Fig. 21 described above, for example, in regard to metal ion, the action of ion changes having a predetermined pH as a fiducial level. There are regions in which metal ion exists and regions in which hydroxyl complex ion exists.

In addition, as illustrated in Fig. 22, when silica in the desulfurized wastewater 31B exceeds pH 8, the solubility rapidly increases. Thus, when the action of metal ion and silica in the desulfurized wastewater 31B is adopted as the detection item of the water treatment facility, the accuracy of the estimated water quality 43 is improved.

According to the present Example, based on the power generation operation information 40 from the power generation facility 20 which is a plant facility, the water quality estimating unit 42 estimates the water quality in the desulfurized wastewater 31B as the estimated water quality 43, and the control unit 44 performs the feedforward control over the operational condition for the water treatment facility 50 from the estimated water quality 43. Thus, it is possible to cope with a rapid fluctuation in water quality of the desulfurized wastewater 31B.

In addition, in the present Example as well, as illustrated in Fig. 2, in addition to the power generation operation information 40 from the power generation facility 20, the second operation data acquiring unit 71 may acquire the water treatment operation information 70 from the water treatment facility 50. Then, the water quality estimating unit 42 estimates the water quality of the desulfurized wastewater 31B as the estimated water quality 43 based on the power generation operation information 40 acquired by the first operation data acquiring unit 41 and the water treatment operation information 70 acquired by the second operation data acquiring unit 71. The control unit 44 can perform the feedforward (FF) control 45 in which the operational condition for a water treatment facility 50B is added, based on the estimated water quality 43 from the water quality estimating unit 42.

Accordingly, based on the operation information in which the operation information of the power generation facility 20 and the operation information of the water treatment facility 50B are combined, it is possible to obtain the estimated water quality 43 with high accuracy. Thus, it is possible to cope with a rapid fluctuation in water quality of the desulfurized wastewater 31B.

Moreover, in the present Example as well, as illustrated in Fig. 3, the second detecting unit 13B (not illustrated) can detect the state of the equipment in the water treatment facility 50 after the FF control 45 is performed based on the obtained estimated water quality 43, and the second operation data acquiring unit 71 can acquire the water treatment operation information 70 of the water treatment facility 50 after the FF control 45. The water treatment operation information 70 of the second operation data acquiring unit 71 is output to the control unit 44. The control unit 44 determines whether or not the feedforward (FF) control over the water treatment facility 50B performed based on the estimated water quality 43 is appropriate, thereby performing the feedback (FB) control 46 over the result of the determination.

Accordingly, it is possible to determine whether or not the operation of the water treatment facility 50 performed after the feedforward (FF) control 45 is appropriate. In a case where the operation is not appropriate, an operation corrected through the FB control 46 can be executed. Thus, it is possible to more unerringly cope with a rapid fluctuation in water quality of the desulfurized wastewater 31B.

### Example 7

A water treatment system according to Example 7 of the present invention will be described with reference to the drawings.

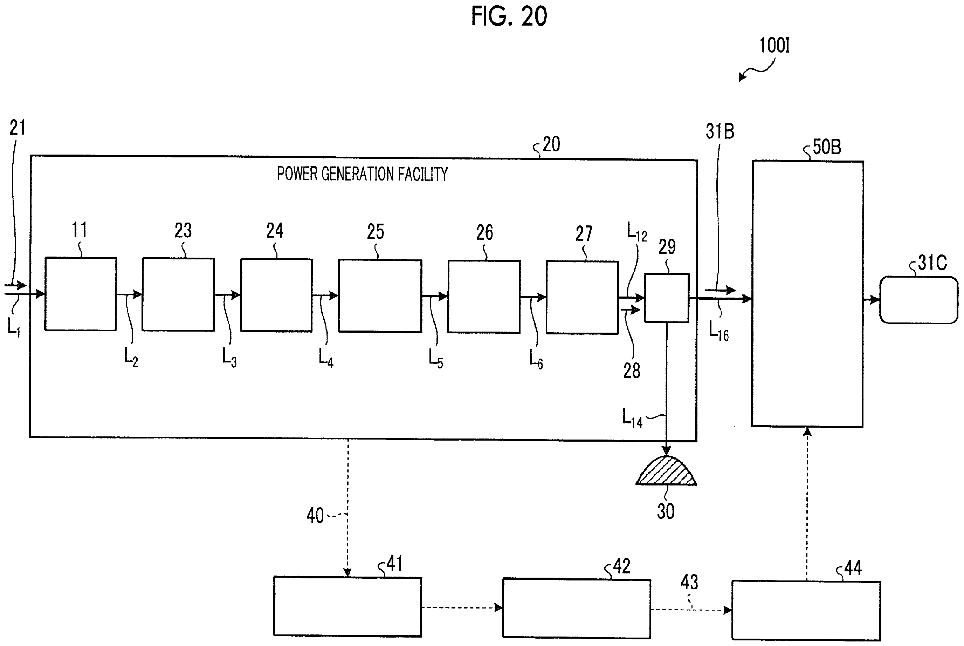

Fig. 20 is a schematic view illustrating the water treatment system according to Example 7. The same reference signs will be applied to the overlapping members in the configuration of the water treatment system according to Example 1, and the description thereof will not be repeated.

As illustrated in Fig. 20, a water treatment system 100I according to Example 7 is provided with the power generation facility 20 including the boiler 11, the denitration apparatus 23, the air heater 24, the heat recovery facility 25, the dust removing apparatus 26, and the desulfurization apparatus 27.

In addition, in the micro-organism water treatment facility 50B in which the desulfurized wastewater 31B from the desulfurization apparatus 27 is subjected to water treatment with microorganisms, an organism treatment tank performing microorganism treatment for the desulfurized wastewater 31B is installed, and water treatment is carried out for effluent water 31C after treatment, to a level equal to or lower than the effluent restriction value.

In the present Example, in a case where coal is employed as the fuel 21 to be supplied to the boiler 11 and in a case where the type of the coal (coal type) thereof varies, the first operation data acquiring unit 41 acquires the power generation operation information 40, and the water quality estimating unit 42 estimates the selenic concentration and the nitrogenous concentration of the desulfurized wastewater 31B as the estimated water quality 43.

In a case where the coal type varies, the content of the selenium (Se) component contained in coal fluctuates. Therefore, the first operation data acquiring unit 41 acquires the information of the coal type as the power generation operation information 40, and the water quality estimating unit 42 estimates the selenic concentration in the desulfurized wastewater 31B, from the information, thereby obtaining the estimated water quality 43. The control unit 44 calculates the addition amount of selenium reducing bacteria added in an organism treatment tank, from the obtained estimated water quality 43. Selenium in the desulfurized wastewater 31B has forms of hexavalent selenium (Se⁶⁺) and tetravalent selenium (Se⁴⁺) in accordance with redox atmosphere. Since zerovalent selenium (Se⁰) and tetravalent selenium (Se⁴⁺) have low solubility, the zerovalent selenium (Se⁰) and the tetravalent selenium (Se⁴⁺) are deposited and separated as solid matters by a separator (not illustrated).

Then, the control unit 44 performs the feedforward control over the addition amount of the selenium reducing bacteria such that the calculated addition amount is achieved.

In a case where selenium adheres to soot and dust in the flue gas, the quantity thereof contained in the desulfurized wastewater 31B fluctuates due to the dust removing rate in the dust removing apparatus 26 or the operational condition for the flue gas treatment facility 12.

Thus, in addition to the fluctuation in coal type, it is preferable to obtain the detection items of limestone, the load on the boiler (= the supply rate of coal), the dust removing apparatus 26, and the desulfurization apparatus 27.

Particularly, it is preferable that the concentration of soot and dust after dust removing performed by the dust removing apparatus 26, the applying voltage, the particle size distribution of soot and dust, the flow rate of gas, the pressure loss, and the field intensity are adopted as the detection items. In addition, it is preferable that pH of the absorbent slurry 28 in the desulfurization apparatus 27, ORP, the temperature, the supply quantity of the limestone slurry 60, the wastewater speed of the desulfurized wastewater 31B, the discharge flow rate of the desulfurized wastewater 31B, the wastewater water quality of the desulfurized wastewater 31B at the current operation time, and the like are adopted as the detection items.

The water quality estimating unit 42 assumes the form of selenium in the desulfurization apparatus 27 from the power generation operation information 40 such as coal, the limestone slurry 60, the content of selenium in the absorbent slurry 28, the concentration of soot and dust in the flue gas, the concentration of soot and dust after dust removing performed by the dust removing apparatus 26, the dust removing rate in the desulfurization apparatus 27, and the like, thereby estimating the selenic concentration (hexavalent selenium and tetravalent selenium) in the desulfurized wastewater 31B as the estimated water quality 43.

The control unit 44 obtains the operational condition for regulating a carbon source for selenium reduction (for example, methanol and lactate) and regulating addition of selenium reducing bacteria, from the estimated water quality 43 and performs the feedforward control. As the addition of selenium reducing bacteria, for example, sludge and dewatered sludge recovered from the organism treatment tank of the micro-organism water treatment facility 50B, dry sludge, freeze-dried sludge, and biological preparation may be employed. In addition, the extraction quantity of sludge from the organism treatment tank may be regulated.

In addition, in the organism treatment tank, the nitrogenous concentration is important in wastewater treatment employing the microorganisms. Therefore, there is a need to estimate the water quality regarding the nitrogenous concentration in the desulfurized wastewater 31B.

When estimating the nitrogenous concentration, it is preferable that the NOx detection value after the denitration apparatus 23 decomposes NOx (NO and NO₂), the NH₃ detection value, the ammonia adding speed, the temperature, and the flow rate of gas are adopted as the detection items.

Particularly, it is preferable that the concentration of soot and dust after dust removing performed by the dust removing apparatus 26, the applying voltage, the particle size distribution of soot and dust, the flow rate of gas, the pressure loss, and the field intensity are adopted as the detection items. In addition, it is preferable that pH of the absorbent slurry 28 in the desulfurization apparatus 27, ORP, the temperature, the supply quantity of the limestone slurry 60, the wastewater speed of the desulfurized wastewater 31B, the discharge flow rate of the desulfurized wastewater 31B, the wastewater water quality of the desulfurized wastewater 31B at the current operation time, and the like are adopted as the detection items.

The water quality estimating unit 42 estimates the concentration of nitrogen in the desulfurized wastewater 31B as the estimated water quality 43 from the power generation operation information 40 such as the content of nitrogen in coal, the concentration of NOx in the flue smoke, the concentration of NOx₃ after NOx is decomposed by the denitration apparatus 23, and the concentration of NH₃ of the denitration chemical agent.

The control unit 44 obtains the operational condition for regulating the supply quantity of air, regulating the oxidation reduction potential (ORP) and DO, regulating the addition amount of methanol for reducing nitric acid, and the like, from the estimated water quality 43 regarding the concentration of nitrogen, and performs the feedforward control.

According to the present Example, in a case where a fluctuation in coal type or a fluctuation in load on the boiler occurs, at least one of the nitrogenous concentration and the selenic concentration in the desulfurized wastewater 31B flowing into the organism treatment tank is obtained. The control unit 44 performs the feedforward control over at least one of, for example, a supply quantity of air to be supplied, the addition amount of the chemical agent, the addition amount of organisms, and the extraction quantity of sludge with respect to the micro-organism water treatment facility 50B, in accordance with the obtained nitrogenous concentration or the obtained selenic concentration. Accordingly, the micro-organism water treatment facility 50B can stably perform water treatment, and thus, it is possible to perform water treatment in which the effluent restriction value is maintained at all times.

In addition, in the present Example as well, as illustrated in Fig. 2, in addition to the power generation operation information 40 from the power generation facility 20, the second operation data acquiring unit 71 may acquire the water treatment operation information 70 from the water treatment facility 50B. Then, the water quality estimating unit 42 estimates the water quality of the desulfurized wastewater 31B as the estimated water quality 43 based on the power generation operation information 40 acquired by the first operation data acquiring unit 41 and the water treatment operation information 70 acquired by the second operation data acquiring unit 71. The control unit 44 can perform the feedforward (FF) control 45 in which the operational condition for a water treatment facility 50B is added, based on the estimated water quality 43 from the water quality estimating unit 42.

Accordingly, based on the operation information in which the operation information of the power generation facility 20 and the operation information of the water treatment facility 50B are combined, it is possible to obtain the estimated water quality 43 with high accuracy. Thus, it is possible to cope with a rapid fluctuation in water quality of the desulfurized wastewater 31B.

Moreover, in the present Example as well, as illustrated in Fig. 3, the second detecting unit 13B (not illustrated) can detect the state of the equipment in the microorganism water treatment facility 50B after the FF control 45 is performed based on the obtained estimated water quality 43, and the second operation data acquiring unit 71 can acquire the water treatment operation information 70 of the water treatment facility 50B after the FF control 45. The water treatment operation information 70 of the second operation data acquiring unit 71 is output to the control unit 44. The control unit 44 determines whether or not the feedforward (FF) control over the water treatment facility 50B performed based on the estimated water quality 43 is appropriate, thereby performing the feedback (FB) control 46 over the result of the determination. Accordingly, it is possible to determine whether or not the operation of the microorganism water treatment facility 50B performed after the feedforward (FF) control 45 is appropriate. In a case where the operation is not appropriate, an operation corrected through the FB control 46 can be executed. Thus, it is possible to more unerringly cope with a rapid fluctuation in water quality of the desulfurized wastewater 31B.

### Reference Signs List

10, 10A TO 10F, 100A TO 100I WATER TREATMENT SYSTEM
11 BOILER
12 FLUE GAS TREATMENT FACILITY
13A FIRST DETECTING UNIT
13B SECOND DETECTING UNIT
13C THIRD DETECTING UNIT
20 POWER GENERATION FACILITY
25 HEAT RECOVERY FACILITY
27 DESULFURIZATION APPARATUS
30 GYPSUM
31 WASTEWATER
31A POND WASTEWATER
31B DESULFURIZED WASTEWATER
31C EFFLUENT WATER
32 POND
40 POWER GENERATION OPERATION INFORMATION
41 FIRST OPERATION DATA ACQUIRING UNIT
42 WATER QUALITY ESTIMATING UNIT
43 ESTIMATED WATER QUALITY
44 CONTROL UNIT
47 THIRD OPERATION DATA ACQUIRING UNIT
48A, 48B WATER QUALITY INFORMATION
49 REGULATION TANK
50 WATER TREATMENT FACILITY
50A ZERO-DISCHARGE WATER TREATMENT FACILITY
50B MICRO-ORGANISM WATER TREATMENT FACILITY
56 REGENERATED WATER
57 CONCENTRATED WATER
58 DESALINATION APPARATUS
59 EVAPORATOR
60 LIMESTONE SLURRY
70 WATER TREATMENT OPERATION INFORMATION
71 SECOND OPERATION DATA ACQUIRING UNIT
90A, 90B, 90C PRETREATMENT UNIT
G FLUE GAS

## Claims

1. A water treatment system for treating wastewater discharged from a plant facility, the system comprising:
a water treatment facility in which the wastewater is treated;
a first operation data acquiring unit which acquires plant operation information from the plant facility;
a water quality estimating unit which estimates water quality of the wastewater based on the plant operation information acquired by the first operation data acquiring unit; and
a control unit which performs feedforward control over an operational condition for the water treatment facility based on the estimated water quality estimated by the water quality estimating unit.

2. The water treatment system according to Claim 1, further comprising:
a second operation data acquiring unit which acquires water treatment operation information of the water treatment facility,
wherein the water quality estimating unit estimates the water quality of the wastewater based on the plant operation information and the water treatment operation information.

3. The water treatment system according to Claim 1, further comprising:
a third operation data acquiring unit which acquires water quality information between the plant facility and the water treatment facility,
wherein the water quality estimating unit estimates the water quality of the wastewater based on the plant operation information and the water quality information acquired by the third operation data acquiring unit.

4. The water treatment system according to Claim 1, further comprising:
a regulation tank which is installed between the plant facility and the water treatment facility and keeps the wastewater for a predetermined time.

5. The water treatment system according to Claim 3, further comprising:
a regulation tank which is installed between the plant facility and the water treatment facility and keeps the wastewater for a predetermined time,
wherein the third operation data acquiring unit acquires the water quality information of the wastewater inside the regulation tank.

6. The water treatment system according to Claim 1,
wherein the water treatment facility is provided with a desalination apparatus in which the wastewater is separated into regenerated water and concentrated water,
wherein the water quality estimating unit estimates ionic properties of Ca²⁺ and SO₄²⁻ in influent water flowing into the desalination apparatus, based on at least one of fuel data of the plant facility and operation data of the plant facility, calculates a saturation index of gypsum in the influent water from the estimated ionic properties of Ca²⁺ and SO₄²⁻ in the influent water, and calculates a first water recovery rate of the desalination apparatus from the saturation index of the gypsum, and
wherein the control unit controls at least one of supply pressure and a supply flow rate of the influent water to be supplied to the desalination apparatus such that the calculated first water recovery rate is realized.

7. The water treatment system according to Claim 1,
wherein the water treatment facility is provided with a desalination apparatus in which the wastewater is separated into regenerated water and concentrated water,
wherein the water quality estimating unit estimates ionic concentration in influent water flowing into the desalination apparatus, based on at least one of fuel data of the plant facility and operation data of the plant facility, calculates concentration of total dissolved solids in the influent water from the estimated ionic concentration of the influent water, and calculates a second water recovery rate of the desalination apparatus from the concentration of the total dissolved solids, and
wherein the control unit controls at least one of supply pressure and a supply flow rate of the influent water to be supplied to the desalination apparatus such that the calculated second water recovery rate is realized.

8. The water treatment system according to Claim 1,
wherein the water treatment facility is provided with a desalination apparatus in which the wastewater is separated into regenerated water and concentrated water,
wherein the water quality estimating unit estimates ionic properties of Ca²⁺ and SO₄²⁻ in influent water flowing into the desalination apparatus, based on at least one of fuel data of the plant facility and operation data of the plant facility, calculates a saturation index of gypsum in the influent water from the estimated ionic properties of Ca²⁺ and SO₄²⁻ in the influent water, calculates a first water recovery rate of the desalination apparatus from the saturation index of the gypsum, estimates ionic concentration in the influent water flowing into the desalination apparatus, based on at least one of the fuel data of the plant facility and the operation data of the plant facility, calculates concentration of total dissolved solids in the influent water from the estimated ionic concentration of the influent water, calculates a second water recovery rate of the desalination apparatus from the concentration of the total dissolved solids, compares a value of the calculated first water recovery rate with a value of the calculated second water recovery rate, and selects a water recovery rate having a lower value, and
wherein the control unit controls at least one of supply pressure and a supply flow rate of the influent water to be supplied to the desalination apparatus such that the selected water recovery rate is realized.

9. The water treatment system according to Claim 1,
wherein the water treatment facility is provided with a desalination apparatus in which the wastewater is separated into regenerated water and concentrated water,
wherein the water quality estimating unit estimates ionic properties of Ca²⁺ and SO₄²⁻ in influent water flowing into the desalination apparatus, based on at least one of fuel data of the plant facility and operation data of the plant facility, calculates a saturation index of gypsum in the influent water from the estimated ionic properties of Ca²⁺ and SO₄²⁻ in the influent water, and calculates an addition amount of a scale inhibitor to be added in the influent water, from the estimated saturation index of the gypsum, and
wherein the control unit controls the addition amount of the scale inhibitor such that the addition amount of the scale inhibitor meets the calculated addition amount.

10. The water treatment system according to Claim 1,
wherein the water treatment facility is provided with a silica treatment unit which removes a silica composition in the wastewater, and a desalination apparatus in which treated water having the silica composition removed is separated into regenerated water and concentrated water,
wherein the water quality estimating unit estimates concentration of the silica composition in the wastewater flowing into the silica treatment unit, based on at least one of fuel data of the plant facility and operation data of the plant facility, and
wherein the control unit controls an addition amount of a silica treatment chemical agent to be supplied to the silica treatment unit, in accordance with the concentration of the silica composition estimated by the water quality estimating unit.

11. The water treatment system according to Claim 1,
wherein the water treatment facility is provided with an oxidation treatment unit which performs oxidation treatment for a metal composition in the wastewater, and a desalination apparatus in which treated water treated by the oxidation treatment unit is separated into regenerated water and concentrated water,
wherein the water quality estimating unit estimates concentration of the metal composition in the wastewater flowing into the oxidation treatment unit, based on at least one of fuel data of the plant facility and operation data of the plant facility, and
wherein the control unit controls a supply quantity of an oxidant to be supplied to the oxidation treatment unit, in accordance with the estimated concentration of the metal composition.

12. The water treatment system according to Claim 1,
wherein the water treatment facility is provided with an ion exchange unit which performs treatment of adsorbing ion in the wastewater, a degassing unit which separates gas from the wastewater, and a desalination apparatus in which the wastewater is separated into regenerated water and concentrated water,
wherein the water quality estimating unit estimates ionic properties of Ca²⁺ and SO₄²⁻ in influent water flowing into the desalination apparatus, based on at least one of fuel data of the plant facility and operation data of the plant facility, calculates a saturation index of gypsum in the influent water from the estimated ionic properties of Ca²⁺ and SO₄²⁻ in the influent water, and calculates a first water recovery rate of the desalination apparatus from the saturation index of the gypsum, and
wherein the control unit controls at least one of supply pressure and a supply flow rate of the influent water to be supplied to the desalination apparatus such that the calculated first water recovery rate is realized.

13. The water treatment system according to Claim 1,
wherein the water treatment facility is provided with an ion exchange unit which performs treatment of adsorbing ion in the wastewater, a degassing unit which separates gas from the wastewater, and a desalination apparatus in which the wastewater is separated into regenerated water and concentrated water,
wherein the water quality estimating unit estimates ionic concentration in influent water flowing into the desalination apparatus, based on at least one of fuel data of the plant facility and operation data of the plant facility, calculates concentration of total dissolved solids in the influent water from the estimated ionic concentration of the influent water, and calculates a second water recovery rate of the desalination apparatus from the concentration of the total dissolved solids, and
wherein the control unit controls at least one of supply pressure and a supply flow rate of the influent water to be supplied to the desalination apparatus such that the calculated second water recovery rate is realized.

14. The water treatment system according to Claim 1,
wherein the water treatment facility is provided with an ion exchange unit which performs treatment of adsorbing ion in the wastewater, a degassing unit which separates gas from the wastewater, and a desalination apparatus in which the wastewater is separated into regenerated water and concentrated water,
wherein the water quality estimating unit estimates ionic properties of Ca²⁺ and SO₄²⁻ in influent water flowing into the desalination apparatus, based on at least one of fuel data of the plant facility and operation data of the plant facility, calculates a saturation index of gypsum in the influent water from the estimated ionic properties of Ca²⁺ and SO₄²⁻ in the influent water, calculates a first water recovery rate of the desalination apparatus from the saturation index of the gypsum, estimates ionic concentration in the influent water flowing into the desalination apparatus, based on at least one of the fuel data of the plant facility and the operation data of the plant facility, calculates concentration of total dissolved solids in the influent water from the estimated ionic concentration of the influent water, calculates a second water recovery rate of the desalination apparatus from the concentration of the total dissolved solids, compares a value of the calculated first water recovery rate with a value of the calculated second water recovery rate, and selects a water recovery rate having a lower value, and
wherein the control unit controls at least one of supply pressure and a supply flow rate of the influent water to be supplied to the desalination apparatus such that the selected water recovery rate is realized.

15. The water treatment system according to Claim 1,
wherein the water treatment facility is provided with an ion exchange unit which performs treatment of adsorbing ion in the wastewater, a degassing unit which separates gas from the wastewater, and a desalination apparatus in which the wastewater is separated into regenerated water and concentrated water,
wherein the water quality estimating unit estimates ionic properties of Ca²⁺ and SO₄²⁻ in influent water flowing into the desalination apparatus, based on at least one of fuel data of the plant facility and operation data of the plant facility, calculates a saturation index of gypsum in the influent water from the estimated ionic properties of Ca²⁺ and SO₄²⁻ in the influent water, and calculates an addition amount of a scale inhibitor to be added in the influent water, from the saturation index of the gypsum, and
wherein the control unit controls the addition amount of the scale inhibitor such that the addition amount of the scale inhibitor meets the calculated addition amount.

16. The water treatment system according to Claim 1,
wherein the water treatment facility is provided with an ion exchange unit which performs treatment of adsorbing ion in the wastewater, a degassing unit which separates gas from the wastewater, and a desalination apparatus in which the wastewater is separated into regenerated water and concentrated water,
wherein the water quality estimating unit estimates ionic properties of Ca²⁺ and HCO₃⁻, and pH in influent water flowing into the desalination apparatus, based on at least one of fuel data of the plant facility and operation data of the plant facility, and calculates a regeneration frequency of an ion exchange resin in which the influent water circulates, from the estimated ionic properties of Ca²⁺ and HCO₃⁻, and the estimated pH in the influent water, and
wherein the control unit controls the regeneration frequency of the ion exchange resin such that the regeneration frequency of the ion exchange resin meets the calculated regeneration frequency.

17. The water treatment system according to Claim 1,
wherein the water treatment facility is provided with an ion exchange unit which performs treatment of adsorbing ion in the wastewater, a degassing unit which separates gas from the wastewater, and a desalination apparatus in which the wastewater is separated into regenerated water and concentrated water,
wherein the water quality estimating unit estimates an ionic property of Mg²⁺ in influent water flowing into the desalination apparatus, based on at least one of fuel data of the plant facility and operation data of the plant facility, and calculates a regeneration frequency of an ion exchange resin in which the influent water circulates, from the estimated ionic property of Mg²⁺, and
wherein the control unit controls the regeneration frequency of the ion exchange resin such that the regeneration frequency of the ion exchange resin meets the calculated regeneration frequency.

18. The water treatment system according to Claim 1,
wherein the water treatment facility is provided with an ion exchange unit which performs treatment of adsorbing ion in the wastewater, a degassing unit which separates gas from the wastewater, and a desalination apparatus in which the wastewater is separated into regenerated water and concentrated water,
wherein the water quality estimating unit estimates an ionic property of HCO₃⁻ in influent water flowing into the desalination apparatus, based on at least one of fuel data of the plant facility and operation data of the plant facility, and calculates operational pH of the degassing unit in which the influent water circulates, from estimated concentration of HCO₃²⁻ , and
wherein the control unit controls the pH of the degassing unit such that the operational pH of the degassing unit meets the calculated pH.

19. The water treatment system according to any one of Claims 12 to 18,
wherein the water treatment facility is further provided with a silica treatment unit which removes a silica composition in the wastewater,
wherein the water quality estimating unit estimates concentration of the silica composition in the wastewater flowing into the silica treatment unit, based on at least one of fuel data of the plant facility and operation data of the plant facility, and
wherein the control unit controls an addition amount of a silica treatment chemical agent to be supplied to the silica treatment unit, in accordance with the concentration of the silica composition estimated by the water quality estimating unit.

20. The water treatment system according to any one of Claims 12 to 18,
wherein the water treatment facility is further provided with a solid-liquid separating unit which separates suspended solids from the wastewater,
wherein the water quality estimating unit estimates concentration of the suspended solids in the wastewater flowing into the solid-liquid separating unit, based on at least one of the fuel data of the plant facility and the operation data of the plant facility, and
wherein the control unit controls a supply quantity of a flocculant to be supplied to the solid-liquid separating unit, in accordance with the estimated concentration of the suspended solids.

21. The water treatment system according to Claim 1, further comprising:
a second operation data acquiring unit which acquires water treatment operation information of the water treatment facility after the feedforward control is performed,
wherein the control unit performs the feedback control over the operational condition for the water treatment facility based on the water treatment operation information acquired by the second operation data acquiring unit.

22. The water treatment system according to any one of Claims 6 to 18, further comprising:
an evaporator which causes the concentrated water from the desalination apparatus to evaporate.

23. The water treatment system according to Claim 1,
wherein the water treatment facility is an organism treatment tank,
wherein the water quality estimating unit estimates nitrogenous concentration and selenic concentration in the wastewater flowing into the organism treatment tank, based on at least one of fuel data of the plant facility and operation data of the plant facility, and
wherein the control unit controls at least one of a supply quantity of air to be supplied, an addition amount of a chemical agent, an addition amount of an organism, and an extraction quantity of sludge with respect to the organism treatment tank, in accordance with the estimated nitrogenous concentration or the estimated selenic concentration.

24. A power generation plant comprising:
a power generation facility which is provided with a boiler and a flue gas treatment apparatus treating flue gas of the boiler; and
a water treatment system which treats wastewater discharged from the power generation facility,
wherein the water treatment system includes a water treatment facility in which the wastewater is treated, an operation data acquiring unit which acquires operation information from the power generation facility, a water quality estimating unit which estimates water quality of the wastewater based on the operation information acquired by the operation data acquiring unit, and a control unit which performs feedforward control over an operational condition for the water treatment facility based on the estimated water quality estimated by the water quality estimating unit.

25. A method for controlling a water treatment system provided with a water treatment facility for treating wastewater discharged from a plant facility, the method comprising:
a first operation data acquiring step of acquiring plant operation information from the plant facility;
a water quality estimating step of estimating water quality of the wastewater based on information acquired in the first operation data acquiring step; and
a controlling step of performing feedforward control over an operational condition for the water treatment facility based on the estimated water quality estimated in the water quality estimating step.

26. The method for controlling a water treatment system according to Claim 25, further comprising:
a second operation data acquiring step of acquiring water treatment operation information from the water treatment facility,
wherein the estimated water quality of the wastewater is estimated based on the plant operation information and the water treatment operation information.

27. The method for controlling a water treatment system according to Claim 25, further comprising:
a second operation data acquiring step of acquiring water treatment operation information of the water treatment facility after the feedforward control is performed,
wherein in the controlling step, the feedback control is performed over the operational condition for the water treatment facility based on the water treatment operation information acquired in the second operation data acquiring step.
